# EUROPÄISCHE PATENTSCHRIFT

(11) **EP 4 152 226 B1**
(45) Veröffentlichungstag und Bekanntmachung des Hinweises auf die Patenterteilung: **04.11.2026**
(21) Anmeldenummer: 22195347.4
(22) Anmeldetag: 13.09.2022
(51) Int. Cl.: G06Q 10/06, G06Q 10/08

(54) **LOGISTIKSYSTEM, FLOTTENMANAGEMENTSERVER UND VERFAHREN ZUM BETREIBEN EINES LOGISTIKSYSTEMS**
LOGISTICS SYSTEM, FLEET MANAGEMENT SERVER AND METHOD FOR OPERATING A LOGISTICS SYSTEM
SYSTÈME LOGISTIQUE, SERVEUR DE GESTION DE FLOTTES ET PROCÉDÉ DE FONCTIONNEMENT D'UN SYSTÈME LOGISTIQUE

(30) Priorität: 17.09.2021 DE 102021124159
(43) Veröffentlichungstag der Anmeldung: 22.03.2023
(60) Teilanmeldung: 26204678.2 / 4 831 888
(73) Patentinhaber: Jungheinrich Aktiengesellschaft, 22047 Hamburg (DE)
(72) Erfinder: WEBER, Alexander Heiko, 22081 Hamburg (DE); LINDEMANN, Sebastian, 22081 Hamburg (DE); OFF, Dominik, 22299 Hamburg (DE)
(74) Vertreter: Seemann & Partner Patentanwälte mbB

(56) Entgegenhaltungen:
- EP-A1- 2 963 596
- WO-A1-2019/161296

## Beschreibung

Die Erfindung betrifft ein Logistiksystem, umfassend einen externen Server und zumindest ein Logistikzentrum, wobei das Logistikzentrum eine Mehrzahl von an einem Logistikstandort vorhandenen Logistikhandhabungsvorrichtungen umfasst, die an dem Logistikstandort betreibbar sind, und wobei als Logistikhandhabungsvorrichtung sowohl ein Flurförderzeug als auch eine Logistikvorrichtung, die mit dem Flurförderzeug zusammenwirkt, bezeichnet wird. Ferner umfasst das Logistikzentrum einen Flottenmanagementserver und eine Mehrzahl von Zugangspunkten, wobei der Flottenmanagementserver dazu eingerichtet ist über die Zugangspunkte eine drahtlose Datenverbindung mit den Logistikhandhabungsvorrichtungen des Logistikzentrums zu betreiben.

Ferner betrifft die Erfindung einen Flottenmanagementserver in einem solchen Logistiksystem. Die Erfindung betrifft ebenfalls ein Verfahren zum Betreiben eines Logistiksystems, wobei das Logistiksystem einen externen Server und zumindest ein Logistikzentrum umfasst, wobei das Logistikzentrum umfasst: eine Mehrzahl von an einem Logistikstandort vorhandenen Logistikhandhabungsvorrichtungen, die an dem Logistikstandort betrieben werden, wobei als Logistikhandhabungsvorrichtung sowohl ein Flurförderzeug als auch eine Logistikvorrichtung, die mit dem Flurförderzeug zusammenwirkt, bezeichnet wird, einen Flottenmanagementserver und eine Mehrzahl von Zugangspunkten, wobei der Flottenmanagementserver über die Zugangspunkte eine drahtlose Datenverbindung mit den Logistikhandhabungsvorrichtungen des Logistikzentrums betreibt.

In einem Logistikstandort kommunizieren die dort eingesetzten Logistikhandhabungsvorrichtung, beispielsweise Flurförderzeuge, in vielen Fällen über drahtlose Datenverbindungen mit einem Flottenmanagementserver. Dieser und weitere Netzwerkkomponenten, die zur Herstellung der Datenverbindung erforderlich sind, bilden ein Standortkommunikationssystem. Über den Flottenmanagementserver können Betriebsdaten jedes einzelnen Flurförderzeugs, beispielsweise seine Betriebsstundenzahl oder sein Ladezustand abgefragt werden. In manchen Standorten kann der Flottenmanagementserver auch auf die Fahrzeugsteuerung der Flurförderzeuge zugreifen und aus dieser Informationen abfragen. Beispielsweise kann ein Fehlerspeicher der Fahrzeugsteuerung ausgelesen werden.

Aus US 8,583,314 B2 ist ein System bekannt, welches eine Übersicht auf einem Bildschirm (Dashboard) bereitstellt, so dass Statusinformationen der an einem Standort vorhandenen Flurförderzeuge auf unterschiedlichen und mehr oder weniger detaillierten Ebenen abgerufen werden können. Außerdem ist es möglich, Daten der Flurförderzeuge an einen vertrauenswürdigen Server eines Dritten zu kommunizieren. So wird die Möglichkeit geschaffen, die drahtlos gesammelten Informationen der Flurförderzeuge über verschiedene Standorte hinweg zu sammeln und auszuwerten.

Beim Export von Daten ist es üblich, dass eine manuelle Abfrage oder ein manueller Export der Flottenmanagementdaten durchgeführt wird, beispielsweise über ein Web-Frontend. Der Datenaustausch erfolgt durch Austausch von Dateien, d.h. es werden einzelne Dateien, welche die entsprechenden Informationen zum Betrieb oder der Nutzung der Flurförderzeuge enthalten, beispielsweise von dem Flottenmanagementserver abgerufen oder von diesem ausgehend manuell exportiert. Ein solcher Datenaustausch ist für den Nutzer relativ umständlich und außerdem nur sehr langsam durchführbar.

EP 2 963 596 A1 offenbart ein Flottenmanagementsystem, in dem mobile Einheiten, beispielsweise Flurförderzeuge, über eine drahtlose Datenverbindung mit einem Zugangspunkt kommunizieren. Ein Steuerrechner kommuniziert über die drahtlosen Datenverbindungen mit den Flurförderzeugen. Dieser steht über ein Netzwerk mit einem externen Rechner in Verbindung.

Aus WO 2019/161296 A1 ist ein System bekannt, in dem verschiedene Sensoren von Flurförderzeugen mit einer Art Telematikbox, bezeichnet als "data edge", in Verbindung stehen. Diese kommuniziert mit einem cloudbasierten Server über eine API. Mit dem cloudbasierten Server steht außerdem zum Zweck der Datenanalyse ein externer Rechner in Verbindung. Auch dieser beispielsweise von einer Dritten Partei zur Verfügung gestellte Rechner kommuniziert mit dem cloudbasierten Server über eine API.

Es ist eine Aufgabe der Erfindung, ein Logistiksystem, einen Flottenmanagementserver in einem Logistiksystem sowie ein Verfahren zum Betreiben eines Logistiksystems anzugeben, wobei dieses Logistiksystem einen externen Server und ein Logistikzentrum umfasst, welches wiederum zumindest einen Logistikstandort umfasst, an dem eine Mehrzahl von Logistikhandhabungsvorrichtungen betreibbar ist, und wobei ein Datenaustausch zwischen dem externen Server und dem Logistikzentrum verbessert werden soll.

Die Aufgabe wird gelöst durch ein Logistiksystem, umfassend einen externen Server und zumindest ein Logistikzentrum, wobei das Logistikzentrum umfasst:
eine Mehrzahl von an einem Logistikstandort vorhandenen Logistikhandhabungsvorrichtungen, die an dem Logistikstandort betreibbar sind, wobei als Logistikhandhabungsvorrichtung sowohl ein Flurförderzeug als auch eine Logistikvorrichtung, die mit dem Flurförderzeug zusammenwirkt, bezeichnet wird,
einen Flottenmanagementserver und
eine Mehrzahl von Zugangspunkten,
wobei der Flottenmanagementserver dazu eingerichtet ist über die Zugangspunkte eine drahtlose Datenverbindung mit den Logistikhandhabungsvorrichtungen des Logistikzentrums zu betreiben,

wobei dieses Logistiksystem dadurch fortgebildet ist, dass
der Flottenmanagementserver dazu eingerichtet ist, eine Programmierschnittstelle (API) bereitzustellen und der Flottenmanagement-server und der externe Server dazu eingerichtet sind über die Programmierschnittstelle (API) unter Verwendung eines Netzwerkprotokolls eine Datenverbindung zu betreiben, und über diese Datenverbindung Daten betreffend zumindest eine Logistikhandhabungsvorrichtung der Mehrzahl von in dem Logistikzentrum betreibbaren Logistikhandhabungsvorrichtungen zu übertragen, wobei der Flottenmanagementserver mit einer Mehrzahl von Endpunkten, die Datenquellen sind, datentechnisch gekoppelt ist und dazu eingerichtet ist, Daten zumindest eines Endpunkts über einen für diesen Endpunkt spezifischen Parameter der Programmierschnittstelle (API) an den externen Server zu übertragen.

Die Programmierschnittstelle, im Folgenden bezeichnet als "API", abgeleitet von der vielfach verwendeten englischen Bezeichnung "Application Programming Interface", wird beispielsweise auf der Grundlage von TCP/IP oder primär HTTP betrieben. Durch den Einsatz einer API kann eine hochfrequente Kommunikation zwischen dem externen Server und dem Flottenmanagementserver des Logistikzentrums bereitgestellt werden. Derart hohe kommunikationstechnische Anforderungen sind an Logistiksysteme bisher nicht gestellt worden. Über die API ist es möglich, protokollbasiert einen schnellen und automatischen Datenaustausch zu implementieren, was mit herkömmlichen Lösungen bisher nicht möglich war.

Die Datenverbindung zwischen dem externen Server und dem Flottenmanagement, insbesondere die Datenverbindung zwischen dem externen Server, dem Flottenmanagement und zumindest einer Logistikhandhabungsvorrichtung, ist insbesondere bidirektional. So ist es beispielsweise möglich, nicht nur Nutzungsdaten der an einem Logistikstandort betriebenen Logistikhandhabungsvorrichtungen, beispielsweise einer Flotte von Flurförderzeugen, mit dem externen Server abzurufen und auszuwerten, sondern gegebenenfalls auch ein oder mehrere Flurförderzeuge der Flotte zu konfigurieren. Die Nutzungsdaten der Flurförderzeuge stehen hochfrequent und somit quasi in Echtzeit dem externen Server zur Verfügung. Dies ermöglicht eine entsprechend schelle Auswertung der Nutzungsdaten.

Die Datenverbindung kann, wie oben beispielhaft erwähnt, zu einem oder mehreren Flurförderzeugen hergestellt werden. Als Logistikhandhabungsvorrichtungen werden jedoch auch Logistikvorrichtungen bezeichnet, die mit dem Flurförderzeug zusammenwirken. Entsprechend ist ebenso vorgesehen, dass alternativ oder zusätzlich eine oder mehrere Datenverbindungen zu einer oder mehreren solcher Logistikvorrichtungen betrieben wird/werden. Eine Logistikvorrichtung ist beispielsweise ein Ladegerät für ein Flurförderzeug oder ein Regalbediengerät eines in dem Logistikstandort vorhandenen Regals, mit welchem das Flurförderzeug zusammenwirkt, also beispielsweise Logistikeinheiten in diesem Regal abstellt oder aus diesem entlädt.

Gemäß einer Ausführungsform ist die Logistikhandhabungsvorrichtung ein Flurförderzeug. Aus diesem Grund wird im Kontext der vorliegenden Beschreibung vornehmlich auf ein Flurförderzeug als Logistikhandhabungsvorrichtung Bezug genommen. Die erläuterten Aspekte betreffen jedoch in gleicher oder ähnlicher Weise die anderen Logistikhandhabungsvorrichtungen, bei denen es sich nicht um Flurförderzeuge handelt, also beispielsweise Ladegeräte für Flurförderzeuge.

In einem Logistiksystem gemäß Aspekten der Erfindung ist es möglich, durch den wesentlich besseren, weil schnelleren und automatisierbaren Datenaustausch ein Echtzeitabbild oder Nahechtzeitabbild der Nutzungssituation der Flurförderzeuge in dem Logistikzentrum einem externen Server zur Verfügung zu stellen. Dies schafft gewaltige Möglichkeiten zur Optimierung des Einsatzes der Flurförderzeuge in dem Logistiksystem.

Das Logistikzentrum befindet sich nicht notwendigerweise an einem einzigen Standort. Das Logistikzentrum kann mehrere Logistikstandorte aufweisen, die sich an verschiedenen geografischen Orten befinden. Es ist ferner nicht erforderlich, dass beispielsweise der Flottenmanagementserver am Ort des Logistikstandorts selbst vorhanden ist. Der Flottenmanagementserver kann räumlich entfernt von dem Logistikstandort angeordnet sein oder auch beispielsweise als virtuelle Maschine in einer dezentralen Cloud implementiert sein.

Der Zugriff auf die von dem Flottenmanagementserver bereitgestellte API wird über Programmierschnittstellen-Schlüssel, welche im Folgenden als "API key" bezeichnet werden, organisiert.

Gemäß einer Ausführungsform ist vorgesehen, dass der externe Server dazu eingerichtet ist, einen API key an den Flottenmanagement-server zu übertragen und der Flottenmanagementserver dazu eingerichtet ist, einen Zugriff des externen Servers auf die Programmierschnittstelle in Abhängigkeit einer Berechtigung des API keys zu gestatten oder zu verweigern.

In Abhängigkeit der Berechtigung des API keys erhält der externe Server beispielsweise einen Lesezugriff, einen Schreibzugriff oder einen Lese- und Schreibzugriff. Die Zugriffsrechte können sich weiterhin beispielsweise auf bestimmte Ressourcen des Flottenmanagementservers beziehen. Bei diesen Ressourcen kann es sich beispielsweise um bestimmte Datenbestände oder bestimmte Datenbanken handeln. In diesen Datenbeständen oder Datenbanken sind beispielsweise Nutzungsdaten der Flurförderzeuge vorhanden. Diese Datenbestände können außerdem verschiedenen Klassen zugeordnet sein. Die Klassen repräsentieren beispielsweise bestimmte Vertraulichkeitsstufen oder Berechtigungsstufen. In Abhängigkeit der Berechtigung des API keys erhält der externe Server beispielsweise Zugriff auf alle oder nur bestimmte Klassen von Daten.

Eine weitere Berechtigungsstufe, welche über den API key geregelt werden kann, ist der Zugriff auf einen oder mehrere Logistikstandorte, die von dem Logistikzentrum umfasst sind. Beispielsweise berechtigt der API key den externen Server auf lediglich einen Logistikstandort oder eine festgelegte Gruppe von Logistikstandorten des Logistikzentrums zuzugreifen.

Die Zugriffssteuerung betreffend den Logistikstandort ist der Zugriffssteuerung auf die Ressourcen des Flottenmanagementservers übergeordnet. Dies bedeutet, dass der externe Server nur dann auf Ressourcen des Flottenmanagementservers zugreifen kann, wenn er auch die entsprechende Berechtigung für den Logistikstandort hat, welchem der entsprechende Flottenmanagementserver zugeordnet ist.

Der API key kann den externen Server ebenso berechtigen direkt auf Logistikhandhabungsvorrichtungen, beispielsweise Flurförderzeuge oder Ladegeräte, des Logistikstandorts zuzugreifen. Auch dieses Zugriffsrecht ist dem Zugriffsrecht auf den Logistikstandort untergeordnet, was bedeutet, dass der Zugriff auf einen oder mehrere Ressourcen einer oder mehrerer Logistikhandhabungsvorrichtungen nur gestattet wird, wenn die Berechtigung für den Logistikstandort vorliegt, an welchem die Logistikhandhabungsvorrichtungen betreibbar sind. Die Ressourcen der Logistikhandhabungsvorrichtung sind insbesondere Endpunkte, deren Daten über für diesen Endpunkt spezifischen Parameter der Programmierschnittstelle (API) übertragen werden. Endpunkt können sowohl Datenquellen als auch Datensenken sein.

Die Berechtigung des API keys kann beispielsweise einen Lesezugriff, einen Schreibzugriff oder einen Lese- und Schreibzugriff umfassen, welcher bestimmte Ressourcen einer Logistikhandhabungsvorrichtung betrifft. Bei diesen Ressourcen kann es sich ebenfalls um Datenbestände oder Datenbanken handeln, ebenfalls als Ressourcen können jedoch auch Sensoren angesehen werden, deren Daten direkt abgefragt oder ausgelesen werden können. Auch hier kann wiederum eine Klassifikation der Ressourcen vorgenommen werden, was sich in der Berechtigung des API keys widerspiegeln kann. Beispielsweise ist die Berechtigung des API keys so ausgestaltet, dass dieser nur auf Ressourcen der Logistikhandhabungsvorrichtung bestimmter Klassen zugreifen kann. Bei den Klassen kann es sich beispielsweise um Einteilungen entsprechend einer Vertraulichkeitsskala oder Betriebssicherheitsskala handeln. So berechtigt ein API key beispielsweise zum Zugriff auf Sensordaten der Logistikhandhabungsvorrichtung, beispielsweise des Fahrzeugs, nicht aber auf personenbezogene Daten. Ebenso denkbar ist, dass ein API key beispielsweise den externen Server berechtigt auf Datenbestände der Logistikhandhabungsvorrichtung zuzugreifen, nicht jedoch das direkte Auslesen von Sensoren erlaubt. Eine weitere Klassifikation kann beispielsweise im Hinblick auf die Wichtigkeit der betreffenden Parameter für die Betriebsfähigkeit der Logistikhandhabungsvorrichtung getroffen werden.

Der Flottenmanagementserver ist mit einer Mehrzahl von Endpunkten, die Datenquellen sind, datentechnisch gekoppelt und dazu eingerichtet, Daten zumindest eines Endpunkts über einen für diesen Endpunkt spezifischen Parameter der Programmierschnittstelle (API) an den externen Server zu übertragen.

Die Datenquellen können beispielsweise in dem Flottenmanagementserver oder auch in einem oder mehreren der an den Logistikstandort des Flottenmanagementservers vorhandenen Logistikhandhabungsvorrichtungen vorhanden sein. Beispielsweise ist eine Datenquelle ein Speicherort in dem Flottenmanagementserver, an welchem Daten betreffend den Betrieb der Logistikhandhabungsvorrichtungen in dem Logistikstandort gespeichert sind. Es kann sich bei der Datenquelle ebenso um einen Speicher handeln, welcher in einer Logistikhandhabungsvorrichtung vorhanden ist. In einem solchen Speicher können beispielsweise Daten betreffend einen Betrieb dieses speziellen Flurförderzeugs oder Ladegeräts vorhanden sein. Eine Datenquelle kann jedoch ebenso über mehrere Entitäten verteilt sein. Beispielsweise kann eine Datenquelle aus mehreren Speicherbereichen bestehen, die sich an verschiedenen physischen Orten befinden. So kann ein Teil der Daten auf einem Speicher des Flottenmanagementservers und ein weiterer Teil der Daten an einem Speicherort der Logistikhandhabungsvorrichtung vorhanden sein. Auch bei solchen verteilt vorhandenen Daten kann es sich um Daten betreffend den Betrieb eines oder mehrerer Logistikhandhabungsvorrichtungen handeln.

Eine Berechtigungssteuerung des Zugriffs auf die Datenquellen erfolgt über eine Berechtigungsvergabe der dieser zugeordneten Parameter der API. Diese Zugriffssteuerung erfolgt ebenfalls über einen API key, welcher den externen Server berechtigt, auf einen oder mehrere Parameter der API und somit auf die den Parametern zugeordneten Datenquellen zuzugreifen. Auch hier kann eine Klassifikation vorgenommen werden, beispielsweise können die Parameter anhand von Vertraulichkeitsstufen, Betriebssicherheitsstufen oder dergleichen klassifiziert sein.

Gemäß einer weiteren vorteilhaften Ausführungsform ist das Logistiksystem dadurch fortgebildet, dass der Flottenmanagementserver ferner dazu eingerichtet ist, dem externen Server zu gestatten, der Programmierschnittstelle (API) zumindest einen weiteren Parameter hinzuzufügen.

Indem es dem externen Server gestattet wird, der API weitere Parameter hinzuzufügen, kann ein äußerst flexibles System bereitgestellt werden. Die Berechtigung, der API weitere Parameter hinzuzufügen, erfolgt wiederum über den API key. Der externe Server wird durch diese Funktionalität der API in die Lage versetzt, die API entsprechend der eigenen Bedürfnisse zu konfigurieren. Das Logistiksystem ist also äußerst flexibel.

Gemäß einer weiteren vorteilhaften Ausführungsform ist vorgesehen, dass der Flottenmanagementserver ferner dazu eingerichtet ist, dem externen Server zu gestatten, Daten zumindest eines Endpunkts über den für diesen Endpunkt spezifischen Parameter der Programmierschnittstelle (API) abzufragen, wobei der Endpunkt sich insbesondere innerhalb einer Logistikhandhabungsvorrichtung, beispielsweise innerhalb eines Flurförderzeugs, befindet.

Der externe Server wird mit anderen Worten in die Lage versetzt, Daten von einem Endpunkt, bei dem es sich um eine Datenquelle handelt, abzufragen. In ähnlicher Weise wie bereits zuvor erläutert, erfolgt diese Berechtigung über den API key. So ist es dem externen Server möglich, auf seine eigene Initiative hin Daten beispielsweise direkt aus einem Flurförderzeug oder einem Ladegerät abzurufen. Vorteilhaft liegen diese Daten quasi in Echtzeit in dem externen Server vor. Dies ist ausschließlich durch die Verwendung einer API möglich. Der externe Server ist nicht darauf angewiesen, dass der Flottenmanagementserver, beispielsweise in regelmäßigen zeitlichen Intervallen, Berichte über den Betrieb der Logistikhandhabungsvorrichtungen in dem Logistikstandort liefert. Der externe Server kann beispielsweise dann, wenn es die Datenauswertung erfordert, die aktuellen Daten abfragen.

Bei dem Endpunkt, welcher sich insbesondere innerhalb einer Logistikhandhabungsvorrichtung wie etwa einem Flurförderzeug befindet, handelt es sich beispielsweise um einen Sensor oder einen Speicherort innerhalb der Logistikhandhabungsvorrichtung, beispielsweise des Flurförderzeugs.

Gemäß weiterer vorteilhafter Ausführungsformen ist das Logistiksystem fortgebildet, dass die Logistikhandhabungsvorrichtung ein Flurförderzeug ist und zumindest eines der folgenden Merkmale a) bis e) aufweist:
a) das Flurförderzeug umfasst einen Positionssensor als einen Endpunkt und ist dazu eingerichtet, seine Position innerhalb des Logistikstandorts zu bestimmen,
b) das Flurförderzeug umfasst einen Beschleunigungssensor als einen Endpunkt, wobei das Flurförderzeug insbesondere ferner dazu eingerichtet ist, während einer Zeitspanne den Beschleunigungssensor mehrfach auszulesen und ausgelesene Beschleunigungswerte an einem internen Speicherort zu speichern, wobei der Speicherort einen Endpunkt darstellt,
c) das Flurförderzeug ist dazu eingerichtet, einen aktuellen Betriebsstundenwert zu bestimmen, insbesondere aus einer Fahrzeugsteuerung des Flurförderzeugs abzufragen, wobei das Flurförderzeug einen Speicherort für den Betriebsstundenwert umfasst und dieser Speicherort ein Endpunkt ist
d) das Flurförderzeug umfasst eine Traktionsbatterie und ist dazu eingerichtet, einen aktuellen Ladezustand der Traktionsbatterie zu bestimmen, insbesondere aus einer Fahrzeugsteuerung des Flurförderzeugs abzufragen, wobei das Flurförderzeug einen Speicherort für den Ladezustand umfasst und dieser Speicherort ein Endpunkt ist,
e) das Flurförderzeug ist dazu eingerichtet, einen aktuellen Betriebszustand zu bestimmen, insbesondere aus einer Fahrzeugsteuerung des Flurförderzeugs abzufragen, wobei das Flurförderzeug einen Speicherort für den Betriebszustand umfasst und dieser Speicherort ein Endpunkt ist.

Der aktuelle Betriebszustand des Flurförderzeugs gibt beispielsweise an, ob das Flurförderzeug sich aktuell in Betrieb befindet oder in einem Stand-by-Zustand, ob es an ein Ladegerät zum Aufladen der Traktionsbatterie angeschlossen ist oder dgl. Gemäß weiterer Ausführungsbeispiele sind an dem Speicherort des Flurförderzeugs beispielsweise Informationen abgelegt zu: Einsatzzeiten des Flurförderzeugs; Einsatzstatistiken zu Betriebsarten wie Fahren/Stehen/Halten/Stand-by; Service Berichte (Reports) von Technikern, die vor Ort eine Wartung oder Reparatur des Flurförderzeugs durchgeführt haben; Informationen zu einer vor Betriebsaufnahme durchgeführten Überprüfung, beispielsweise eine Sichtprüfung oder eine Funktionsprüfung.

Die Auswertung der Daten eines oder mehrerer der zuvor genannten Sensoren oder Speicherorte erlaubt es, genaue Rückschlüsse auf die Betriebssituation des Flurförderzeugs in dem Logistikstandort zu ziehen. Auf der Grundlage dieser Daten kann der Einsatz des Flurförderzeugs an dem Logistikstandort analysiert und optimiert werden. Vorteilhaft kann durch den Einsatz der API diese Analyse und Optimierung nahezu in Echtzeit vorgenommen werden.

Gemäß einer weiteren vorteilhaften Ausführungsform ist das Logistiksystem dadurch fortgebildet, dass die Logistikhandhabungsvorrichtung dazu eingerichtet ist, Daten zumindest eines Endpunkts in Form einer Push-Nachricht über den für diesen Endpunkt spezifischen Parameter der Programmierschnittstelle (API) an den externen Server zu übertragen. Die Push-Nachricht muss nicht direkt von der Logistikhandhabungsvorrichtung generiert werden. Es ist ebenso vorgesehen, dass die Logistikhandhabungsvorrichtung, also beispielsweise das Flurförderzeug mit dem Flottenmanagementserver des Logistikzentrums oder Logistikstandorts kommuniziert und dieser die Push-Nachricht erzeugt und über die API kommuniziert. Gemäß einer weiteren vorteilhaften Ausführungsform ist vorgesehen, dass die Logistikhandhabungsvorrichtung zumindest einen Sensor, insbesondere einen Beschleunigungssensor, als Endpunkt umfasst und dazu eingerichtet ist, durch Auswertung von von dem Sensor erfassten Daten einen kritischen Betriebszustand zu erkennen, wobei die Logistikhandhabungsvorrichtung ferner dazu eingerichtet ist, wenn ein kritischer Betriebszustand erkannt wird, eine Push-Nachricht an den externen Server zu senden.

Ein Ereignis, welches beispielsweise einen kritischen Betriebszustand darstellt, ist eine Kollision eines Flurförderzeugs mit einem Gegenstand. Eine solche Kollision führt regelmäßig zu hohen Beschleunigungswerten und stellt möglicherweise die Betriebsfähigkeit oder Betriebssicherheit des Flurförderzeugs infrage. Liegt eine solche Information nahezu in Echtzeit am externen Server vor, kann beispielsweise ein Standortleiter des Logistikstandorts, der Zugriff auf dem externen Server hat, zur Sicherstellung der Betriebsfähigkeit und/oder der Betriebssicherheit des Standorts entsprechende Maßnahmen einleiten. Ferner ist es durch die Auswertung kritischer Betriebszustände beispielsweise möglich, gebäudebedingte Schwachstellen der Routenführung festzustellen oder für die Planung neuer Logistikstandorte wichtige Informationen zur Routenführung zu erlangen. Die beispielsweise von dem Flurförderzeug erzeugte Push-Nachricht kann von dem Flottenmanagementserver lediglich durch- bzw. weitergeleitet werden. Wiederum wird anhand eines zuvor übermittelten API keys festgestellt, ob der externe Server zum Empfang der Push-Nachrichten autorisiert ist.

Gemäß einer weiteren vorteilhaften Ausführungsform ist das Logistiksystem dadurch fortgebildet, dass der Flottenmanagementserver mit einer Mehrzahl von Zielpunkten, die Datensenken darstellen, datentechnisch gekoppelt ist und dazu eingerichtet ist, Daten für zumindest einen Zielpunkt über einen für diesen Zielpunkt spezifischen Parameter auf der Programmierschnittstelle (API) zu übertragen.

Bei einer Datensenke handelt es sich beispielsweise um einen Speicherort, an dem die übertragenen Daten, insbesondere in der Logistikhandhabungsvorrichtung, gespeichert werden. Auf einen solchen Speicherort kann beispielsweise eine in oder an der Logistikhandhabungsvorrichtung bereitstehende Anzeige zugreifen, so dass es möglich ist, Nachrichten, Warnhinweise oder dergleichen, quasi in Echtzeit auf die Logistikhandhabungsvorrichtung, beispielsweise das Flurförderzeug, zu übertragen.

Die Berechtigung des externen Servers, einen solchen Zielpunkt anzusprechen, erfolgt wiederum über den API key. Wie bereits im Kontext mit den Endpunkten erläutert, kann auch für die Zielpunkte eine Klassifikation, beispielsweise anhand einer Vertraulichkeitsstufe oder einer Betriebssicherheitsstufe, vorgenommen werden. Der entsprechend von dem externen Server übermittelte API key erhält dann eine Berechtigung, auf eine oder mehrere dieser Klassen zuzugreifen.

Gemäß einer vorteilhaften Ausführungsform ist vorgesehen, dass der Flottenmanagementserver ferner dazu eingerichtet ist, auf eine Steuerung der Logistikhandhabungsvorrichtung, insbesondere auf eine Fahrzeugsteuerung des Flurförderzeugs, zuzugreifen und Parameter der Steuerung, insbesondere der Fahrzeugsteuerung, als Zielpunkte zu definieren, wobei insbesondere der Flottenmanagementserver dazu eingerichtet ist, als Zielpunkte zu definieren:
eine Mitarbeiterberechtigung zum Betrieb der Logistikhandhabungsvorrichtung, insbesondere des Flurförderzeugs,
ein Verhaltensmuster der Logistikhandhabungsvorrichtung, insbesondere des Flurförderzeugs, ferner insbesondere betreffend ein Fahrverhalten und/oder ein Verhalten eines Hydrauliksystems des Flurförderzeugs,
eine generelle Betriebsfähigkeit der Logistikhandhabungsvorrichtung, insbesondere des Flurförderzeugs.

Gemäß weiterer Ausführungsformen können als Zielpunkte der Fahrzeugsteuerung definiert werden: eine maximale Hubhöhe eines Hubgerüsts des Flurförderzeugs; eine Hub-/Senkgeschwindigkeit des Lastaufnahmemittels, beispielsweise einer Lastgabel; eine maximale oder allgemeine Fahrgeschwindigkeit des Flurförderzeugs; eine allgemeine Abschaltung des Flurförderzeugs.

Vorteilhaft erlaubt ein solcher Zugriff auf Parameter der Fahrzeugsteuerung des Flurförderzeugs dieses schnell zu konfigurieren oder zu rekonfigurieren. Auch eine interaktive Steuerung oder Konfiguration des Flurförderzeugs ist möglich, wenn die Parameter beispielsweise auf der Grundlage einer Datenanalyse angepasst werden. Die der Datenanalyse zugrundeliegenden Daten können beispielsweise zuvor von dem Flurförderzeug abgerufen worden sein. Wiederum kann die Berechtigung zur Durchführung einer entsprechenden Datenübertragung anhand der Berechtigung des API keys festgelegt sein.

Gemäß einer weiteren Ausführungsform ist vorgesehen, als Zielpunkte Parameter der Fahrzeugsteuerung zu definieren, und zwar diejenigen Parameter, die die Erkennung von Schockereignissen am Flurförderzeug betreffen.

Diese Parameter können einer oder mehrere, insbesondere drei, Schockschwellen sein, die Schockwerte festlegen, bei deren Erreichen oder Überschreiten eine festgelegte Maßnahme erfolgt. Die Schockschwellen können insbesondere Beschleunigungswerte betreffen, die mittels Beschleunigungssensoren am Flurförderzeug in an sich bekannter Weise gemessen werden. Diese Beschleunigungswerte können für die horizontale oder vertikale Richtung festgelegt werden oder für eine Kombination aus beiden. Beispielsweise kann eine erste Schockschwelle bei einer Beschleunigung von 2 G in horizontaler oder 1 G in vertikaler Richtung überschritten sein. Eine zweite Schockschwelle kann bei 2,5 G in horizontaler oder 1,5 G in vertikaler Richtung und eine dritte Schockschwelle kann bei 3 G in horizontaler Richtung oder 2 G in vertikaler Richtung überschritten sein. Bei Überschreiten der genannten und beispielhaft angegebenen Schockschwellen werden jeweils definierte Maßnahmen durch- oder ausgeführt. So kann beispielsweise vorgesehen sein, dass eine entsprechende Anzeige am Flurförderzeug erfolgt und/oder ein Bericht über ein Schockereignis drahtlos übermittelt wird, insbesondere an den externen Server über die API. Diese Maßnahmen können für alle Ereignisse vorgesehen sein, bei denen Schockschwellen überschritten werden, insbesondere für Ereignisse, die die niedrigste Schockschwelle überschreiten.

Weitere mögliche Maßnahmen, die in Reaktion auf ein Schockereignis ergriffen werden, sind das Versetzen des Flurförderzeugs in einen Schleichmodus, in dem eine festgelegte maximale Geschwindigkeit nicht überschritten werden kann. Es ist ebenso vorgesehen, alternativ oder zusätzlich, Fahrzeugfunktionen einzuschränken, wie z.B. das komplette Unterbinden von Hebevorgängen oder das Unterbinden des Anhebens von Lasten über einer festgelegten Masse und/oder über eine festgelegte Höhe. Eine weitere mögliche Maßnahme ist das Stilllegen des Fahrzeugs, insbesondere bei Überschreiten der höchsten Schockschwelle.

Alle genannten Parameter, also beispielsweise Schockschwellen, die auszulösenden Maßnahmen und die hiermit zusammenhängenden Parameter wie Adressaten der Berichte und Anzeigen bei Überschreiten der Schockschwellen sowie die Schleichfahrtgeschwindigkeit können als Zielpunkte vorgesehen und definiert sein. Dementsprechend sind ihre Werte über die API konfigurierbar, wobei die Parameter vorzugsweise im Fahrzeug hinterlegt und auch direkt dort über die API konfigurierbar sind. Es kann ebenso vorgesehen sein, dass über die API eine Funktionseinschränkung (z.B. der Schleichmodus) oder eine Stilllegung des Fahrzeugs aufgehoben werden kann, wenngleich im Allgemeinen hierfür zuvor eine optische Inspektion des Flurförderzeugs und damit auch das Entsperren direkt am Fahrzeug vorgesehen ist.

Die Aufgabe wird außerdem gelöst durch einen Flottenmanagement-server in einem Logistiksystem, umfassend einen externen Server und zumindest ein Logistikzentrum, wobei das Logistikzentrum
eine Mehrzahl von an einem Logistikstandort vorhandenen Logistikhandhabungsvorrichtungen, die an dem Logistikstandort betreibbar sind, wobei als Logistikhandhabungsvorrichtung sowohl ein Flurförderzeug als auch eine Logistikvorrichtung, die mit dem Flurförderzeug zusammenwirkt, bezeichnet wird,
den Flottenmanagementserver und
eine Mehrzahl von Zugangspunkten umfasst,
wobei der Flottenmanagementserver dazu eingerichtet ist, über die Zugangspunkte eine drahtlose Datenverbindung mit den Logistikhandhabungsvorrichtungen des Logistikzentrums zu betreiben,
wobei der Flottenmanagementserver dadurch fortgebildet ist, dass der Flottenmanagementserver dazu eingerichtet ist, eine Programmierschnittstelle (API) bereitzustellen und über die Programmierschnittstelle (API) unter Verwendung eines Netzwerkprotokolls eine Datenverbindung mit dem externen Server zu betreiben und über diese Datenverbindung Daten betreffend zumindest eine Logistikhandhabungsvorrichtung der Mehrzahl von in dem Logistikzentrum betreibbaren Logistikhandhabungsvorrichtungen zu übertragen, wobei der Flottenmanagementserver mit einer Mehrzahl von Endpunkten, die Datenquellen sind, datentechnisch gekoppelt und dazu eingerichtet ist, Daten zumindest eines Endpunkts über einen für diesen Endpunkt spezifischen Parameter der Programmierschnittstelle (API) an den externen Server zu übertragen.

Auf den Flottenmanagementserver treffen gleiche oder ähnliche Vorteile zu, wie sie bereits zuvor im Hinblick auf das Logistiksystem erwähnt wurden.

Gemäß einer vorteilhaften Weiterbildung zeichnet sich der Flottenmanagementserver dadurch aus, dass dieser dazu eingerichtet ist, einen Programmierschnittstellen-Schlüssel (API key) von dem externen Server zu empfangen und einen Zugriff des externen Servers auf die Programmierschnittstelle (API) in Abhängigkeit einer Berechtigung des Programmierschnittstellen-Schlüssels zu gestatten oder zu verweigern.

Der Flottenmanagementserver ist mit einer Mehrzahl von Endpunkten, die Datenquellen sind, datentechnisch gekoppelt und dazu eingerichtet, Daten zumindest eines Endpunkts über einen für diesen Endpunkt spezifischen Parameter der Programmierschnittstelle (API) an den externen Server zu übertragen.

Dieser Flottenmanagementserver ist vorteilhaft dadurch fortgebildet, dass dieser ferner dazu eingerichtet ist, dem externen Server zu gestatten, der Programmierschnittstelle (API) zumindest einen weiteren Parameter hinzuzufügen.

Ferner ist insbesondere vorgesehen, dass der Flottenmanagementserver dazu eingerichtet ist, dem externen Server zu gestatten, Daten zumindest eines Endpunkts über den für diesen Endpunkt spezifischen Parameter der Programmierschnittstelle (API) abzufragen, wobei sich der Endpunkt innerhalb einer Logistikhandhabungsvorrichtung befindet.

Dieser Flottenmanagementserver ist vorteilhaft dadurch fortgebildet, dass dieser dazu eingerichtet ist, Daten zumindest eines Endpunkts in Form einer Push-Nachricht von der Logistikhandhabungsvorrichtung zu empfangen und diese Daten als Push-Nachricht über den für diesen Endpunkt spezifischen Parameter der Programmierschnittstelle (API) an den externen Server weiterzuleiten.

Eine Weiterleitung der Push-Nachricht erfolgt seitens des Flottenmanagementservers an den externen Server, sofern eine entsprechende Berechtigung durch einen zuvor übermittelten API key vorliegt. Auch diese Berechtigung kann gegebenenfalls für einen bestimmten Standort oder für bestimmte Klassen von Daten eingerichtet sein.

Gemäß einer weiteren vorteilhaften Ausführungsform ist vorgesehen, dass der Flottenmanagementserver mit einer Mehrzahl von Zielpunkten, die Datensenken darstellen, datentechnisch gekoppelt und dazu eingerichtet ist, Daten für zumindest einen Zielpunkt und über einen für diesen Zielpunkt spezifischen Parameter der Programmierschnittstelle (API) von dem externen Server zu empfangen und an den zumindest einen Zielpunkt weiterzuleiten.

Dieser Flottenmanagementserver ist ferner insbesondere dazu eingerichtet, auf eine Fahrzeugsteuerung der Logistikhandhabungsvorrichtung zuzugreifen und Parameter der Steuerung der Logistikhandhabungsvorrichtung, insbesondere der Fahrzeugsteuerung des Flurförderzeugs, als Zielpunkte zu definieren. Insbesondere ist der Flottenmanagementserver dazu eingerichtet, als Zielpunkte zu definieren:
eine Mitarbeiterberechtigung zum Betrieb der Logistikhandhabungsvorrichtung, insbesondere des Flurförderzeugs,
ein Verhaltensmuster der Logistikhandhabungsvorrichtung, insbesondere des Flurförderzeugs, ferner insbesondere betreffend ein Fahrverhalten und/oder ein Verhalten eines Hydrauliksystems des Flurförderzeugs,
eine generelle Betriebsfähigkeit der Logistikhandhabungsvorrichtung, insbesondere des Flurförderzeugs.

Die Aufgabe wird ferner gelöst durch ein Verfahren zum Betreiben eines Logistiksystems, wobei das Logistiksystem einen externen Server und zumindest ein Logistikzentrum umfasst, wobei das Logistikzentrum umfasst:
eine Mehrzahl von an einem Logistikstandort vorhandenen Logistikhandhabungsvorrichtungen, die an dem Logistikstandort betrieben werden, wobei als Logistikhandhabungsvorrichtung sowohl ein Flurförderzeug als auch eine Logistikvorrichtung, die mit dem Flurförderzeug zusammenwirkt, bezeichnet wird,
einen Flottenmanagementserver und
eine Mehrzahl von Zugangspunkten, aufweist,
wobei der Flottenmanagementserver über die Zugangspunkte eine drahtlose Datenverbindung mit den Logistikhandhabungsvorrichtungen des Logistikzentrums betreibt, und wobei dieses Verfahren dadurch fortgebildet ist, dass der Flottenmanagementserver eine Programmierschnittstelle (API) bereitstellt und der Flottenmanagementserver und der externe Server über die Programmierschnittstelle (API) unter Verwendung eines Netzwerkprotokolls eine Datenverbindung betreiben, und über diese Datenverbindung Daten betreffend zumindest eine Logistikhandhabungsvorrichtung der Mehrzahl von in dem Logistikzentrum betriebenen Logistikhandhabungsvorrichtungen übertragen werden, wobei der Flottenmanagementserver mit einer Mehrzahl von Endpunkten, die Datenquellen sind, datentechnisch gekoppelt ist und Daten zumindest eines Endpunkts über einen für diesen Endpunkt spezifischen Parameter der Programmierschnittstelle (API) an den externen Server überträgt.

Auch auf das Verfahren treffen gleiche oder ähnliche Vorteile zu, wie sie bereits im Hinblick auf das Logistiksystem erwähnt wurden, weshalb auf Wiederholungen verzichtet werden soll.

Gemäß einer vorteilhaften Weiterbildung ist das Verfahren dadurch fortgebildet, dass der externe Server einen Programmierschnittstellen-Schlüssel (API key) an den Flottenmanagementserver überträgt und der Flottenmanagementserver einen Zugriff des externen Servers auf die Programmierschnittstelle in Abhängigkeit einer Berechtigung des Programmierschnittstellen-Schlüssels (API key) gestattet oder verweigert.

Der Flottenmanagementserver ist mit einer Mehrzahl von Endpunkten, die Datenquellen sind, datentechnisch gekoppelt und überträgt Daten zumindest eines Endpunkts über einen für diesen Endpunkt spezifischen Parameter der Programmierschnittstelle (API) an den externen Server.

Diese Ausführungsform des Verfahrens ist ferner insbesondere dadurch weitergebildet, dass der Flottenmanagementserver ferner dem externen Server gestattet, der Programmierschnittstelle (API) zumindest einen weiteren Parameter hinzuzufügen.

Gemäß einer weiteren vorteilhaften Ausführungsform ist in dem Verfahren zum Betreiben des Logistiksystems vorgesehen, dass der Flottenmanagementserver ferner dem externen Server gestattet, Daten zumindest eines Endpunkts über den für diesen Endpunkt spezifischen Parameter der Programmierschnittstelle (API) abzufragen, wobei sich insbesondere der Endpunkt innerhalb einer Logistikhandhabungsvorrichtung befindet.

Ferner ist insbesondere vorgesehen, dass die Logistikhandhabungsvorrichtung ein Flurförderzeug ist und das Verfahren durch zumindest eines der folgenden Merkmale a) bis e) weitergebildet ist:
a) das Flurförderzeug umfasst einen Positionssensor als Endpunkt und bestimmt seine Position innerhalb des Logistikstandorts,
b) das Flurförderzeug umfasst einen Beschleunigungssensor als Endpunkt, wobei das Flurförderzeug insbesondere ferner während einer Zeitspanne den Beschleunigungssensor mehrfach ausliest und ausgelesene Beschleunigungswerte an einem internen Speicherort speichert, wobei der Speicherort einen Endpunkt darstellt,
c) das Flurförderzeug bestimmt einen aktuellen Betriebsstundenwert, wobei insbesondere der Betriebsstundenwert aus einer Fahrzeugsteuerung des Flurförderzeugs abgefragt wird, und wobei das Flurförderzeug den Betriebsstundenwert an einem Speicherort abspeichert und dieser Speicherort ein Endpunkt ist
d) das Flurförderzeug umfasst eine Traktionsbatterie und bestimmt einen aktuellen Ladezustand der Traktionsbatterie oder fragt insbesondere den aktuellen Ladezustand aus einer Fahrzeugsteuerung des Flurförderzeugs ab, wobei das Flurförderzeug einen Speicherort für den Ladezustand umfasst, Informationen zum aktuellen Ladezustand an diesem Speicherort abspeichert und dieser Speicherort ein Endpunkt ist,
e) das Flurförderzeug einen aktuellen Betriebszustand bestimmt, insbesondere aus einer Fahrzeugsteuerung des Flurförderzeugs abfragt, wobei das Flurförderzeug einen Speicherort für den Betriebszustand umfasst, Informationen zum Betriebszustand an diesem Speicherort abspeichert und dieser Speicherort ein Endpunkt ist.

Gemäß einer weiteren vorteilhaften Ausführungsform ist vorgesehen, dass die Logistikhandhabungsvorrichtung Daten zumindest eines Endpunkts in Form einer Push-Nachricht über den für diesen Endpunkt spezifischen Parameter der Programmierschnittstelle (API) an den externen Server überträgt.

Diese Ausführungsform des Verfahrens ist ferner insbesondere dadurch fortgebildet, dass die Logistikhandhabungsvorrichtung zumindest einen Sensor, insbesondere einen Beschleunigungssensor, als Endpunkt umfasst und durch Auswertung von von dem Sensor erfassten Daten einen kritischen Betriebszustand erkennt, wobei die Logistikhandhabungsvorrichtung ferner, wenn sie einen kritischen Betriebszustand erkannt hat, eine Push-Nachricht an den externen Server sendet.

Das Verfahren ist vorteilhaft dadurch weitergebildet, dass der Flottenmanagementserver mit einer Mehrzahl von Zielpunkten, die Datensenken darstellen, datentechnisch gekoppelt ist und Daten für zumindest einen Zielpunkt über einen für diesen Zielpunkt spezifischen Parameter der Programmierschnittstelle (API) überträgt.

Diese Ausführungsform des Verfahrens zeichnet sich ferner insbesondere dadurch aus, dass der Flottenmanagementserver ferner auf eine Steuerung der Logistikhandhabungsvorrichtung, insbesondere auf eine Fahrzeugsteuerung des Flurförderzeugs, zugreift und Parameter der Steuerung, insbesondere der Fahrzeugsteuerung, als Zielpunkte definiert, wobei insbesondere als Zielpunkte definiert werden:
eine Mitarbeiterberechtigung zum Betrieb der Logistikhandhabungsvorrichtung, insbesondere des Flurförderzeugs,
ein Verhaltensmuster der Logistikhandhabungsvorrichtung, insbesondere des Flurförderzeugs, ferner insbesondere betreffend ein Fahrverhalten und/oder ein Verhalten eines Hydrauliksystems des Flurförderzeugs,
eine generelle Betriebsfähigkeit der Logistikhandhabungsvorrichtung, insbesondere des Flurförderzeugs.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematisch vereinfachte Darstellung eines Logistiksystems, umfassend beispielhaft zwei Logistikzentren,
- Fig. 2: eine schematisch vereinfachte Darstellung eines Logistikzentrums umfassend verschiedene Logistikhandhabungsvorrichtungen,
- Fig. 3: eine schematisch vereinfachte Darstellung eines Flurförderzeugs und eines Ladegeräts als beispielhafte Logistikhandhabungsvorrichtungen, welche mit Zugangspunkten drahtlose Datenverbindungen betreiben,

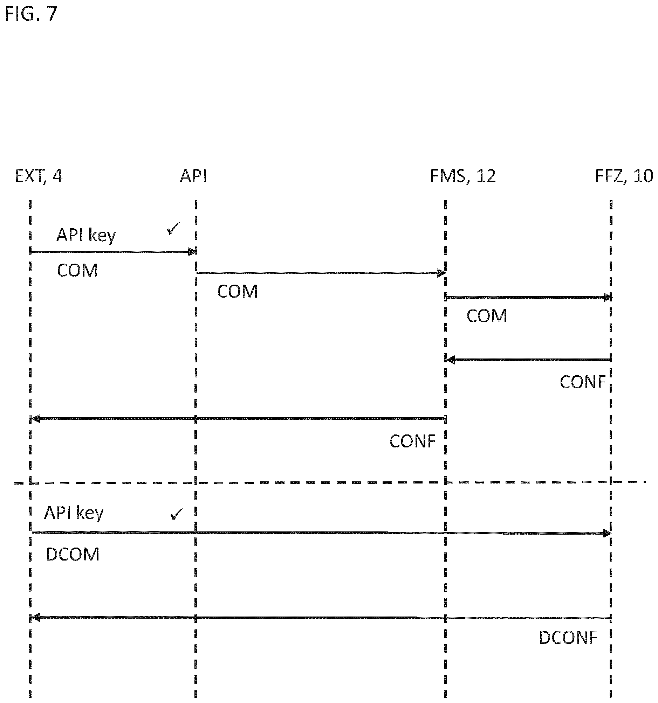

- Fig. 4 - 7: beispielhafte schematische Darstellungen des Ablaufs der Kommunikation zwischen dem externen Server (EXT), dem Flottenmanagementserver (FMS) und einem Flurförderzeug (FFZ) als beispielhafte Logistikhandhabungsvorrichtung, jeweils unter Verwendung einer Programmierschnittstelle (API).

Im Rahmen der Erfindung sind Merkmale, die mit "insbesondere" oder "vorzugsweise" gekennzeichnet sind, als fakultative Merkmale zu verstehen.

In den Zeichnungen sind jeweils gleiche oder gleichartige Elemente und/oder Teile mit denselben Bezugsziffern versehen, so dass von einer erneuten Vorstellung jeweils abgesehen wird.

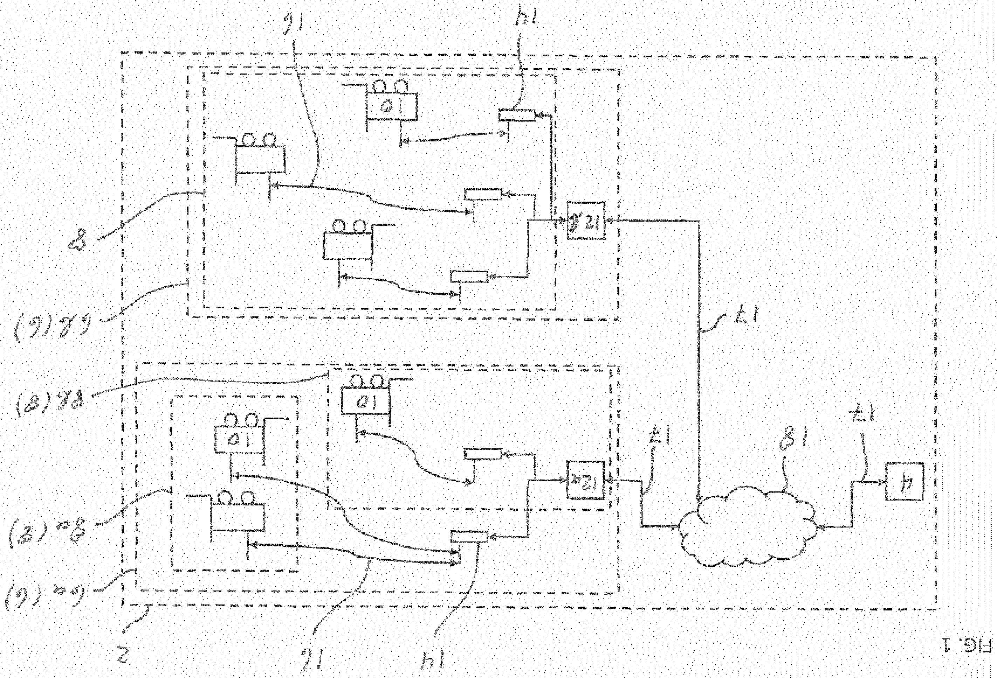

Fig. 1 zeigt in schematisch vereinfachter Darstellung ein Logistiksystem 2, welches einen externen Server 4 und beispielhaft ein erstes Logistikzentrum 6a und ein zweites Logistikzentrum 6b umfasst, welche gemeinsam mit Bezugszeichen 6 bezeichnet werden sollen. Jedes der Logistikzentren 6 umfasst eine Mehrzahl von an einem Logistikstandort 8 vorhandenen Flurförderzeugen 10 als beispielhafte Logistikhandhabungsvorrichtungen (9). Die Flurförderzeuge 10 sind an dem jeweiligen Logistikstandort 8 betreibbar. Aus Gründen der Übersichtlichkeit sind lediglich einige der Flurförderzeuge 10 mit Bezugszeichen versehen. Das erste Logistikzentrum 6a umfasst beispielhaft einen ersten Logistikstandort 8a und einen zweiten Logistikstandort 8b, welche gemeinsam mit Bezugszeichen 8 bezeichnet werden sollen. Das zweite Logistikzentrum 6b umfasst beispielhaft lediglich einen Logistikstandort 8.

Jedes Logistikzentrum 6 umfasst einen Flottenmanagementserver 12. Das erste Logistikzentrum 6a umfasst einen ersten Flottenmanagementserver 12a, das zweite Logistikzentrum 6b umfasst einen zweiten Flottenmanagementserver 12b, die Flottenmanagementserver werden gemeinsam mit Bezugszeichen 12 bezeichnet. Jedes Logistikzentrum 6 umfasst ferner eine Mehrzahl von Zugangspunkten 14, die bevorzugt Teil eines jeweiligen Logistikstandorts 8 sind. Der Flottenmanagementserver 12 ist jeweils über eine geeignete Datenverbindung 17 mit den Zugangspunkten 14 datentechnisch gekoppelt. Datenverbindungen sind in Fig. 1 durch Doppelpfeile angedeutet. Über die Zugangspunkte 14 unterhält der Flottenmanagement-server 12 drahtlose Datenverbindungen 16, von denen wiederum aus Gründen der Übersichtlichkeit lediglich einige mit Bezugszeichen versehen sind, mit den Flurförderzeugen 10. Der Flottenmanagementserver 12 betreibt jeweils drahtlose Datenverbindungen 16 zu den Flurförderzeugen 10 des eigenen Logistikzentrums 6, also dem, dem der Flottenmanagementserver 12 zugeordnet ist.

Beispielhaft ist in Fig. 1 der erste Flottenmanagementserver 12a dem ersten Logistikstandort 8a und dem zweiten Logistikstandort 8b, welche beide Teil des ersten Logistikzentrums 6a sind, zugeordnet. Dementsprechend unterhält der erste Flottenmanagementserver 12a drahtlose Datenverbindungen 16 zu den Flurförderzeugen 10 sowohl des ersten Logistikstandorts 8a als auch des zweiten Logistikstandorts 8b. Beispielhaft befindet sich der erste Flottenmanagementserver 12a in dem ersten Logistikzentrum 6a.

Der zweite Flottenmanagementserver 12b des zweiten Logistikzentrums 6b, welches beispielhaft lediglich einen Logistikstandort 8 umfasst, ist nicht Teil des Logistikstandorts 8. Der Flottenmanagementserver 12 kann räumlich getrennt von dem Logistikstandort 8 angeordnet sein. Es ist ebenso vorgesehen, dass der Flottenmanagementserver 12 beispielsweise in einer Cloud implementiert ist und sein genauer Standort demensprechend wechselt oder nicht genau festgelegt ist.

Der Flottenmanagementserver 12 ist über eine oder mehrere geeignete Datenverbindungen 17, welche insbesondere eine Datenverbindung über das Internet 18 einschließen, mit dem externen Server 4 datentechnisch gekoppelt.

Der Flottenmanagementserver 12 ist dazu eingerichtet, eine Programmierschnittstelle, welche im Folgenden auch als API bezeichnet werden soll, bereitzustellen. Der Flottenmanagementserver 12 und der externe Server 4 sind dazu eingerichtet, über die API unter Verwendung eines Netzwerkprotokolls eine Datenverbindung zu betreiben. Über diese Datenverbindung werden Daten betreffend zumindest eine Logistikhandhabungsvorrichtung, im dargestellten Ausführungsbeispiel zumindest ein Flurförderzeug 10 der Mehrzahl von in dem Logistikzentrum 6 betreibbaren Flurförderzeugen 10 übertragen. Die API wird beispielsweise entsprechend dem Standard open API V3 betrieben. Die Datenübertragung über die API erfolgt beispielsweise unter Verwendung von HTTP als Netzwerkprotokoll. Es wird ferner beispielhaft das ISO 8601 Format für alle Zeitstempel (engl.: time stamps) und Datumsparameter (engl.: date/time parameters) verwendet.

Es ist ferner insbesondere vorgesehen, dass jedem Logistikzentrum 6 und/oder jedem Logistikstandort 8 eine eindeutige Standortkennung (location ID) zugeordnet wird. Diese Kennung ist in allen Kommunikationspaketen zu und von Einheiten des betreffenden Logistikzentrums 6 oder des betreffenden Logistikstandorts 8 vorhanden. Beispielsweise also in Anfragen an den Flottenmanagementserver 12 oder an eine Logistikhandhabungsvorrichtung, beispielhaft ein Flurförderzeug 10 des betreffenden Logistikzentrums 6. So lassen sich die Anfragen schnell und eindeutig den angefragten Endpunkten zuordnen.

Ferner ist insbesondere vorgesehen, dass jede Logistikhandhabungsvorrichtung, beispielsweise jedes Flurförderzeug 10 eine eindeutige Kennung aufweist (equipment ID). Diese weltweit eindeutige Kennung kann einer internen Nummer (equipment No.) zugeordnet sein. Eine Zuordnung zwischen einer internen Nummer (equipment No.) und der eindeutigen Kennung der Logistikhandhabungsvorrichtung, beispielsweise des Flurförderzeugs 10 (equipment ID) kann flexibel angepasst und verändert werden. Dies kann erforderlich sein, wenn beispielsweise Flurförderzeuge 10 von einem Logistikstandort 8 entfernt und einem anderen Logistikstandort 8 hinzugefügt werden. Gleiches gilt für das Hinzufügen und Entfernen von Flurförderzeugen 10 an lediglich einem Logistikstandort 8 oder Logistikzentrum 6, beispielsweise bei Mietfahrzeugen.

Über die Standort-Kennung (location ID) können Informationen über das betreffende Logistikzentrum 6 oder den betreffenden Logistikstandort 8 abgerufen werden, beispielsweise eine Anzahl von Logistikhandhabungsvorrichtungen, insbesondere Flurförderzeugen 10, die in dem betreffenden Logistikzentrum 6 oder an dem betreffenden Logistikstandort 8 betrieben werden. Weitere standortspezifische Informationen wären beispielsweise eine Summe aller in einem bestimmten Zeitraum geleisteten Betriebsstunden aller Flurförderzeug 10, während eines bestimmten Zeitraums aufgetretene Störungen oder dergleichen. Solche Informationen betreffend den Betrieb der Flurförderzeuge 10 in dem entsprechenden Logistikzentrum 6 können in dem Flottenmanagementserver 12, welcher dem Logistikzentrum 6 zugeordnet ist, gespeichert werden oder sein.

Der Speicherort, beispielsweise ein nicht flüchtiges Speichermedium oder dergleichen, ist eine Speicherressource des Flottenmanagementservers 12. Diese Speicherressourcen müssen nicht lokal im Flottenmanagementserver 12 selbst vorgehalten sein, beispielsweise wenn der Flottenmanagementserver 12 als virtuelle Maschine in einer Cloud implementiert ist. Auch eine solche dezentralisierte Ressource und ein dezentralisierter Server werden als Teil des Logistikzentrums 6 angesehen. Entscheidend ist lediglich die funktionelle Zuordnung, nicht die räumliche Anordnung.

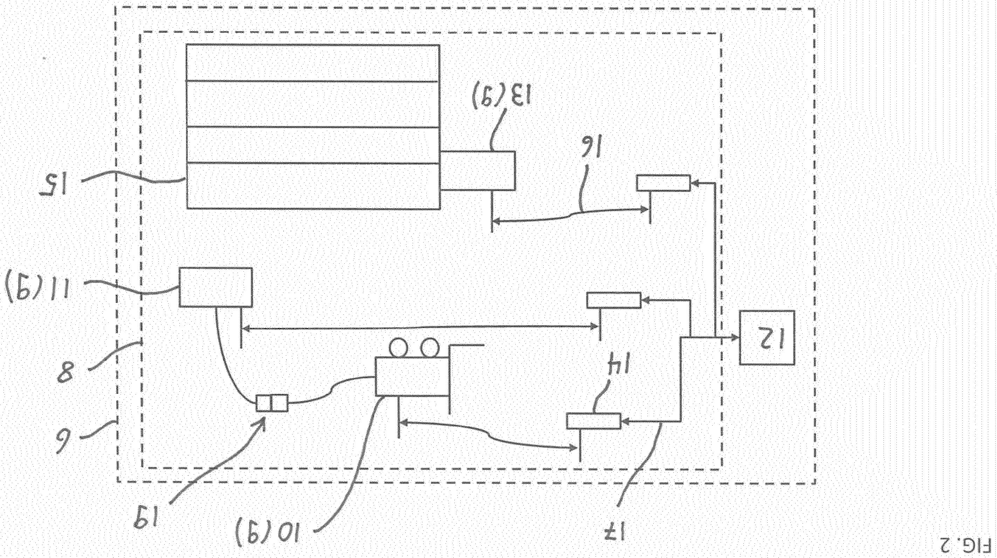

Fig. 2 zeigt in schematisch vereinfachter Darstellung ein weiteres Logistikzentrum 6, welches beispielhaft einen einzigen Logistikstandort 8 umfasst. An dem beispielhaft dargestellten Logistikstandort 8 wird ein Flottenmanagementserver 12, welcher ebenfalls beispielhaft Teil des Logistikzentrums 6 jedoch nicht Teil des Logistikstandorts 8 ist, betrieben. Der Flottenmanagementserver 12 ist über Datenverbindungen 17, von denen aus Gründen der Übersichtlichkeit lediglich eine mit Bezugszeichen versehen ist, mit Zugangspunkten 14 datentechnisch gekoppelt. Die Zugangspunkte 14 stehen über drahtlose Datenverbindungen 16, von denen wiederum aus Gründen der Übersichtlichkeit lediglich eine mit Bezugszeichen versehen ist, in Verbindung mit verschiedenen Logistikhandhabungsvorrichtungen 9. Beispielhaft handelt es sich bei den Logistikhandhabungsvorrichtungen 9 um ein Flurförderzeug 10, um ein Ladegerät 11 zum Aufladen einer Traktionsbatterie des Flurförderzeugs 10 sowie um ein Regalbediengerät 13 zur Bedienung eines Hochregals 15. Das Flurförderzeug 10 ist dazu eingerichtet Logistikeinheiten in dieses Regal 15 zu verbringen oder aus diesem zu entnehmen. In diesem Sinne steht das Flurförderzeug 10 in Wechselwirkung mit dem Hochregal 15 und somit auch mit dem Regalbediengerät 13. Das Ladegerät 11 ist zum Aufladen der Traktionsbatterie des Flurförderzeugs 10 eingerichtet, zu diesem Zweck wird das Ladegerät 11 über eine Steckverbindung 19, mit dem Flurförderzeug 10 gekoppelt, und steht auf diese Weise mit dem Flurförderzeug 10 in Wechselwirkung.

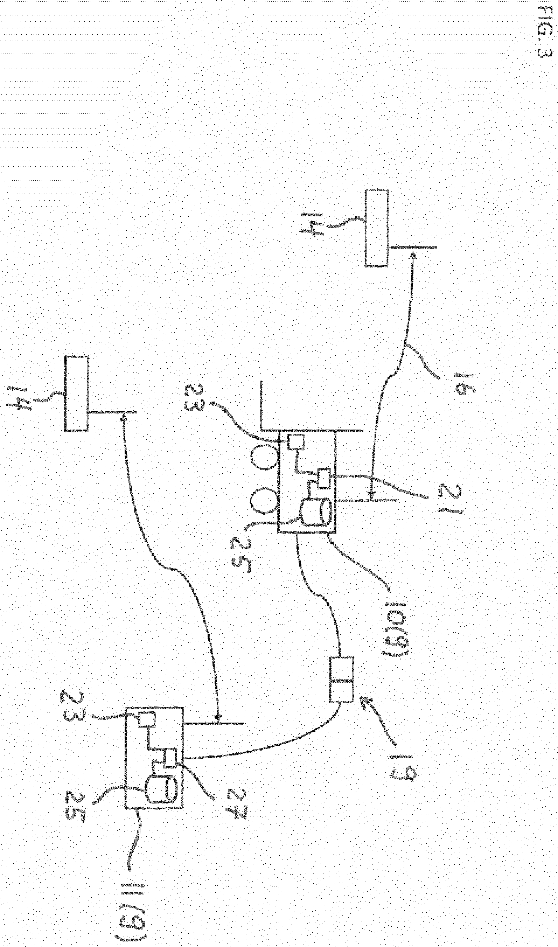

Fig. 3 zeigt in schematisch vereinfachter Ansicht ein Flurförderzeug 10 und ein Ladegerät 11, die über die Steckverbindung 19 miteinander gekoppelt sind. Sowohl das Flurförderzeug 10 als auch das Ladegerät 11 stehen über jeweils eine drahtlose Datenverbindung 16 in datentechnischer Verbindung mit einem der Zugangspunkte 14.

Das Flurförderzeug 10 umfasst ein Fahrzeugsteuergerät 21, welches mit einem Sensor 23, beispielsweise einem Beschleunigungssensor, verbunden ist. Außerdem ist die Fahrzeugsteuerung 21 mit einem Datenspeicher 25 verbunden. Gemäß weiterer Ausführungsbeispiele können sowohl der Sensor 23 als auch der Datenspeicher 25 als Teil der Fahrzeugsteuerung 21 ausgebildet sein.

Das Ladegerät 11 umfasst eine Steuerung 27, welche ebenfalls mit einem Sensor 23, beispielsweise einem Temperatursensor oder einem Spannungssensor, verbunden ist. Auch die Steuerung 27 des Ladegeräts 11 ist mit einem Datenspeicher 25 verbunden. Ebenso wie bereits im Zusammenhang mit dem Flurförderzeug 10 erwähnt, können auch der als Teil des Ladegeräts 11 dargestellte Sensor 23 und der Speicher 25 als Teil der Steuerung 27 ausgebildet sein.

Die erwähnten Sensoren 23 als auch die erwähnten Datenspeicher 25 bzw. Speicherbereiche dieser Datenspeicher 25 stellen Endpunkte innerhalb des Logistiksystems 2 dar. Der Datenspeicher 25 kann sowohl als Datenquelle als auch als Datensenke wirken. Der Sensor 23 stellt hingegen ausschließlich eine Datenquelle dar.

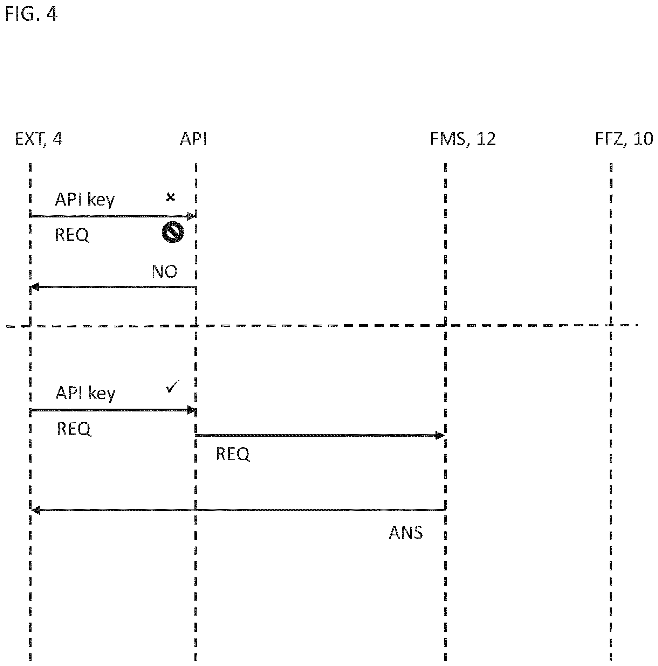

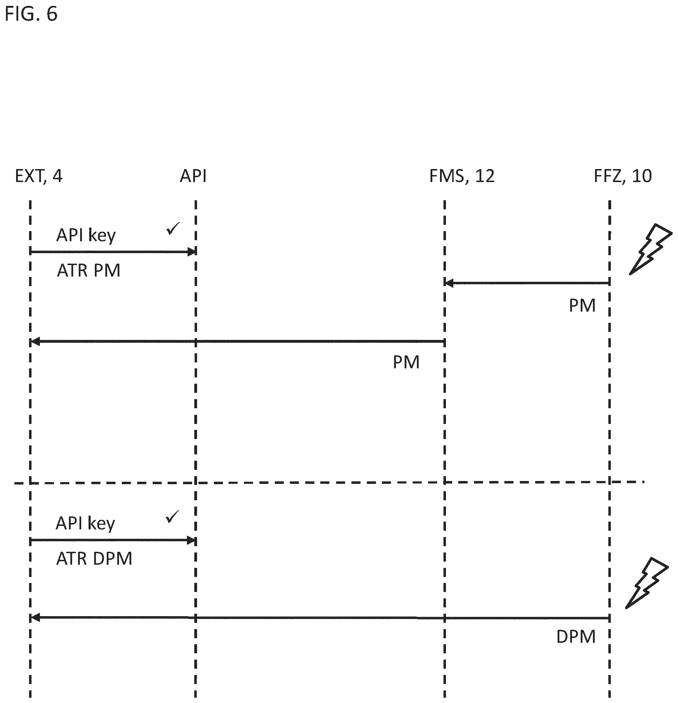

Fig. 4 bis 6 zeigen jeweils beispielhaft eine schematische Darstellung des Ablaufs der Kommunikation zwischen dem externen Server 4 (auch mit EXT bezeichnet), dem Flottenmanagementserver 12 (auch mit FMS bezeichnet) und einem Flurförderzeug 10 (auch mit FFZ bezeichnet) als beispielhafte Logistikhandhabungsvorrichtung 9. Im Kontext der vorliegenden Beschreibung wird lediglich beispielhaft auf ein Flurförderzeug 10 als Logistikhandhabungsvorrichtung 9 Bezug genommen. In gleicher oder ähnlicher Weise, wie die Funktionalität im Hinblick auf das Flurförderzeug 10 beschrieben wird, trifft diese auch für andere Logistikhandhabungsvorrichtungen 9 des erfindungsgemäßen Logistiksystems 2 zu.

Die Kommunikation zwischen dem externen Server 4 und dem Flottenmanagementserver 12 erfolgt über eine Programmierschnittstelle (im Folgenden auch als API bezeichnet). Ebenfalls dargestellt ist die Kommunikation zwischen dem externen Server 4 und einem Flurförderzeug 10 (auch bezeichnet als FFZ).

Im oberen Teil von Fig. 2 ist dargestellt, dass der externe Server 4 einen Programmierschnittstellen-Schlüssel (auch bezeichnet als API key), an die von dem Flottenmanagementserver 12 bereitgestellte API sendet. Der Flottenmanagementserver 12 ist dazu eingerichtet, einen Zugriff des externen Servers 4 auf die API in Abhängigkeit einer Berechtigung des API key zu gestatten oder zu verweigern. In dem in Fig. 2 dargestellten Beispiel wird der API key gemeinsam mit einer Anfrage REQ gesendet. Im oberen Teil von Fig. 2 ist dargestellt, dass beispielhaft der übersendete API key nicht zum Stellen der Anfrage REQ berechtigt. Dementsprechend antwortet der Flottenmanagementserver über die API mit einer Ablehnung NO der Anfrage REQ. Im unteren Teil von Fig. 2 ist dargestellt, dass der API key zum Stellen der Anfrage REQ berechtigt ist, dementsprechend wird die Anfrage REQ über die API weiter an den Flottenmanagementserver 12 geleitet. Dieser antwortet mit einer Antwort ANS. Die Antwort ANS umfasst beispielsweise Daten betreffend die Nutzung der Flurförderzeuge 10, die in dem Logistikzentrum 6 betrieben werden, welchem der Flottenmanagementserver 12 zugeordnet ist.

Der Flottenmanagementserver 12 ist mit einer Mehrzahl von Endpunkten, die Datenquellen sind, datentechnisch gekoppelt. Datenquellen sind beispielsweise nicht flüchtige Datenspeicher oder Speicherbereiche, welche in dem Flottenmanagementserver 12 vorliegen, oder auch nicht flüchtige Datenspeicher oder Speicherbereiche, die in einem Flurförderzeug 10 vorliegen, mit dem der Flottenmanagementserver 12 über die drahtlosen Datenverbindungen 16 datentechnisch gekoppelt ist. Endpunkte, die Datenquellen sind, können auch Sensoren innerhalb eines Flurförderzeugs 10 sein, beispielsweise ein Positionssensor, ein Beschleunigungssensor, ein Temperatursensor oder dergleichen. Ist der Endpunkt ein Positionssensor und ist das Flurförderzeug 10 dazu eingerichtet, seine Position innerhalb des Logistikstandorts 8 zu bestimmen, so kann der externe Server 4 über die API direkt die Position des Flurförderzeugs 10 abfragen, sofern der übermittelte API key ihn dazu berechtigt. Ist der Endpunkt ein Beschleunigungssensor des Flurförderzeugs 10, so kann der externe Server 4 in gleicher Weise aktuelle Beschleunigungswerte des Flurförderzeugs 10 abfragen. Das Flurförderzeug 10 kann aber auch dazu eingerichtet sein, den Beschleunigungssensor während einer bestimmten Zeitspanne, beispielsweise während einer Schicht, mehrfach auszulesen, und die ausgelesenen Beschleunigungswerte an einem internen Speicherort zu speichern oder an den Flottenmanagementserver 12 zu übertragen. Auch dieser Speicherort kann als Endpunkt definiert werden. In einem solchen Fall ist der externe Server 4 abhängig von der Berechtigung des übermittelten API key in der Lage, die von dem Flurförderzeug 10 aufgezeichneten Beschleunigungswerte abzurufen und auszuwerten. Diese Werte geben beispielsweise Auskunft über die Art der Beanspruchung und Nutzung des Flurförderzeugs 10. Das Flurförderzeug 10 kann ferner dazu eingerichtet sein einen Betriebsstundenwert aufzuzeichnen, der typischerweise in der Fahrzeugsteuerung des Flurförderzeugs 10 hinterlegt wird. Auch dieser Speicherort kann als Endpunkt definiert werden, so dass abhängig von der Berechtigung des von dem externen Server 4 übermittelten API key dieser in der Lage ist, direkt den Betriebsstundenwert aus der Fahrzeugsteuerung des Flurförderzeugs 10 über die API abzufragen.

Die Abfrage dieser von den Endpunkten ermittelten oder an den Endpunkten vorliegenden Daten erfolgt über einen für den Endpunkt spezifischen Parameter der API. So kann in der API beispielsweise ein Parameter betreffend die Betriebsstundenzahl oder die Position eines Flurförderzeugs 10 definiert sein oder werden.

Der Flottenmanagementserver 12 kann ferner so eingerichtet sein, dass in Abhängigkeit von der Berechtigung des übermittelten API key der Flottenmanagementserver 12 dem externen Server 4 gestattet der API weitere Parameter hinzuzufügen. Beispielsweise könnte der API ein Parameter betreffend den Benutzer eines Flurförderzeugs 10 hinzugefügt werden, sofern ein solcher Parameter für den Betreiber des externen Servers 4 von Interesse ist.

Die oben geschilderte Kommunikation ist schematisch in Fig. 3 illustriert. Im oberen Teil der Fig. 3 ist dargestellt, dass der externe Server 4 gemeinsam mit einer Anfrage REQ einen API key an die API des Flottenmanagementservers 12 übermittelt. Berechtigt der API key zum Stellen der Anfrage REQ, kann dies seitens des Flottenmanagementservers 12 positiv bestätigt werden (vgl. ANS in Fig. 2 unten), in jedem Fall gelangt die Anfrage REQ zu dem Flottenmanagementserver 12. In Abhängigkeit der Berechtigung des API key, und diese soll beispielhaft vorliegen, wird die Anfrage REQ anschließend von dem Flottenmanagementserver 12 an das Flurförderzeug 10 oder ein bestimmtes Flurförderzeug 10 weitergeleitet. Dieses liefert eine Antwort ANS, beispielsweise einen aus der Betriebssteuerung ausgelesenen Wert der Betriebsstundenzahl, und liefert diesen Wert an den Flottenmanagementserver 12. Dieser kommuniziert über die API die Antwort ANS weiter an den externen Server 4.

Eine weitere Möglichkeit der Kommunikation zwischen dem externen Server 4 und dem Flurförderzeug stellt eine direkte Anfrage DREQ des externen Servers 4 an das Flurförderzeug 10 über die API dar. In einem solchen Fall leitet der Flottenmanagementserver 12 die direkte Anfrage DREQ nach Prüfung der Berechtigung des API key für die Durchführung einer solchen Anfrage direkt an das Flurförderzeug 10 weiter. Das Flurförderzeug 10 antwortet in umgekehrter Richtung über die API mit einer direkten Antwort DANS an den externen Server 4.

Gemäß weiterer Ausführungsbeispiele landet die Anfrage am API Gateway des Flottenmanagementservers 12 und wird von dort beispielsweise an das Flurförderzeug 10 weitergeleitet. Eine solche Form der Kommunikation weist eine geringfügig größere Zeitverzögerung auf als die oben beschriebene direkte Anfrage DREQ.

Gemäß einem weiteren Ausführungsbeispiel ist das Flurförderzeug 10 dazu eingerichtet Daten zumindest eines Endpunkts in Form einer Push-Nachricht über den für diesen Endpunkt spezifischen Parameter der API an den externen Server 4 zu übertragen. Diese Situation ist in Fig. 4 illustriert. Zunächst identifiziert sich der externe Server 4 mit Hilfe eines entsprechenden API key an der API des Flottenmanagementservers 12. Er sendet den API key beispielsweise gemeinsam mit einer Nachricht ATR PM, in welcher er signalisiert, dass er allgemein zum Empfang von Push-Nachrichten PM des Flurförderzeugs 10 bereitsteht. Nach erfolgreicher Verifizierung des zugehörigen API key, angedeutet durch einen Haken, steht der externe Server 4 zum Empfang von Push-Nachrichten PM bereit. Tritt an dem Flurförderzeug 10 ein Ereignis, angedeutet durch einen Pfeil, ein, wird eine Push-Nachricht PM in dem Flurförderzeug 10 erzeugt. Ein solches Ereignis ist beispielsweise ein an einem Beschleunigungssensor des Flurförderzeugs 10 ausgelesener Wert für die Beschleunigung, der einen vorgegebenen Grenzwert überschreitet und somit einen kritischen Betriebszustand des Flurförderzeugs 10 anzeigt. Eine solche Situation tritt beispielsweise ein, wenn ein Flurförderzeug 10 mit einem Gegenstand kollidiert.

Das Flurförderzeug 10 erzeugt eine Push-Nachricht PM, die von dem Flottenmanagementserver 12 über die API an den externen Server 4 weitergeleitet wird. Ein Benutzer des externen Servers 4 wird in die Lage versetzt auf den kritischen Zustand des Flurförderzeugs 10 direkt zu reagieren, beispielsweise Reparatur- oder Gegenmaßnahmen einzuleiten.

Ein weiteres Szenario ist im unteren Teil von Fig. 4 dargestellt. Dort sendet das Flurförderzeug 10 in Reaktion auf ein Ereignis, dargestellt durch einen Pfeil, eine direkte Push-Nachricht DPM an den externen Server 4. Der Flottenmanagementserver 12 leitet diese Nachricht nur weiter, ohne sie zu verarbeiten. Dies setzt voraus, dass der externe Server 4 sich zuvor für den Empfang von direkten Push-Nachrichten DPM mit einem entsprechenden API key an der API des Flottenmanagementservers 12 authentifiziert hat. Eine solche Authentifizierung erfolgt beispielsweise, indem der externe Server 4 eine Nachricht ATR DPM an die API sendet, welche den zugehörigen API key umfasst.

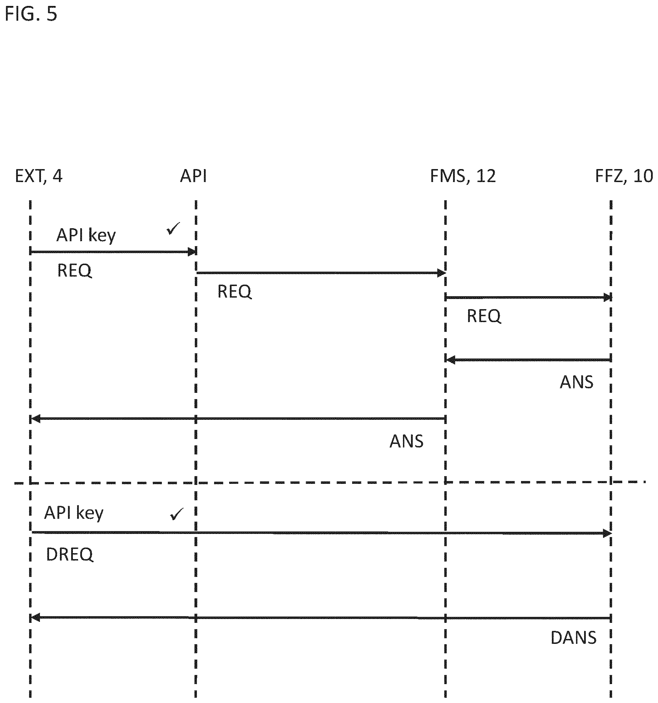

Gemäß einem weiteren Ausführungsbeispiel ist das Logistiksystem 2 dazu eingerichtet, dass der externe Server 4 in die Lage versetzt wird, über die API direkt eine Konfiguration des Flurförderzeugs 10 vorzunehmen. Zu diesem Zweck ist der Flottenmanagementserver 12 mit einer Mehrzahl von Zielpunkten, die Datensenken darstellen, datentechnisch gekoppelt. Solche Zielpunkte sind beispielsweise Speicherbereiche in der Betriebssteuerung des Flurförderzeugs 10, beispielsweise betreffend eine Mitarbeiterberechtigung zum Betrieb des Flurförderzeugs 10 oder Daten betreffend ein Verhaltensmuster des Flurförderzeugs 10, beispielsweise betreffend sein Fahrverhalten oder auch ein Verhalten des Hydrauliksystems des Flurförderzeugs. Ein weiterer Zielpunkt kann ein Speicherbereich in der Fahrzeugsteuerung des Flurförderzeugs 10 sein, welcher eine generelle Betriebsfähigkeit des Flurförderzeugs 10 betrifft. Mit anderen Worten wird es also dem externen Server 4 gestattet, durch Zugriff auf diesen Zielpunkt die Betriebsfähigkeit eines Flurförderzeugs einzuschränken oder gar vollständig auszuschalten. Daten, die für zumindest einen solchen Zielpunkt bestimmt sind, werden über einen für diesen Zielpunkt spezifischen Parameter der API übertragen. Dies ist in Fig. 5 illustriert.

Der externe Server 4 sendet einen Befehl COM und den zugehörigen API key an die API des Flottenmanagementservers 12. Ist die Berechtigung des API keys dazu geeignet, dem externen Server zu gestatten den Befehl COM an das Flurförderzeug 10 zu senden, gelangt der Befehl COM zu dem Flottenmanagementserver 12 und von dort weiter zu dem Flurförderzeug 10. Das Flurförderzeug 10 bestätigt den Empfang des Befehls COM durch eine Befehlsbestätigung CONF. Diese wird über den Flottenmanagementserver 12 zurück an den externen Server 4 kommuniziert.

Im unteren Teil von Fig. 5 ist dargestellt, dass auch in einem solchen Szenario eine direkte Kommunikation zwischen dem externen Server 4 und dem Flurförderzeug 10 vorgesehen sein kann. Der Flottenmanagementserver 12 überprüft lediglich die Berechtigung für eine solche Art der Kommunikation anhand des übermittelten API key. Ein direkter Befehl DCOM wird gemeinsam mit dem zugehörigen API key über die API an das Flurförderzeug 10 gesendet, wobei der Flottenmanagementserver 12 lediglich die Berechtigung des API key an der API prüft und den direkten Befehl DCOM an das Flurförderzeug weiterleitet. Das Flurförderzeug 10 antwortet auf den direkten Befehl DCOM mit einer direkten Befehlsbestätigung DCONF, welche auf umgekehrtem Weg über API an den externen Server 4 kommuniziert wird.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: Logistiksystem
- 4: externer Server
- 6: Logistikzentrum
- 6a: erstes Logistikzentrum
- 6b: zweites Logistikzentrum
- 8: Logistikstandort
- 8a: erster Logistikstandort
- 8b: zweiter Logistikstandort
- 9: Logistikhandhabungsvorrichtung
- 10: Flurförderzeug
- 11: Ladegerät
- 12: Flottenmanagementserver
- 12a: erster Flottenmanagementserver
- 12b: zweiter Flottenmanagementserver
- 13: Regalbediengerät
- 14: Zugangspunkt
- 15: Hochregal
- 16: drahtlose Datenverbindung
- 17: Datenverbindung
- 18: Internet
- 19: Steckverbindung
- 21: Fahrzeugsteuerung
- 23: Sensor
- 25: Datenspeicher
- 27: Steuerung
- API: Programmierschnittstelle
- API key: Programmierschnittstellen-Schlüssel
- REQ: Anfrage
- NO: Ablehnung
- ANS: Antwort
- DREQ: direkte Anfrage
- DANS: direkte Antwort
- ATR PM: Nachricht
- PM: Push-Nachricht
- ATR DPM: Nachricht
- DPM: direkte Push-Nachricht
- COM: Befehl
- CONF: Befehlsbestätigung
- DCOM: direkter Befehl
- DCONF: direkte Befehlsbestätigung
- EXT: externer Server
- FMS: Flottenmanagementserver
- FFZ: Flurförderzeug

## Patentansprüche

1. Logistiksystem (2), umfassend:
einen externen Server (4) und zumindest ein Logistikzentrum (6), wobei das Logistikzentrum (6) umfasst:
eine Mehrzahl von an einem Logistikstandort (8) vorhandenen Logistikhandhabungsvorrichtungen (9), die an dem Logistikstandort (8) betreibbar sind, wobei als Logistikhandhabungsvorrichtung (9) sowohl ein Flurförderzeug (10) als auch eine Logistikvorrichtung (11), die mit dem Flurförderzeug (10) zusammenwirkt, bezeichnet wird,
einen Flottenmanagementserver (12) und
eine Mehrzahl von Zugangspunkten (14),
wobei der Flottenmanagementserver (12) dazu eingerichtet ist über die Zugangspunkte (14) eine drahtlose Datenverbindung (16) mit den Logistikhandhabungsvorrichtungen (9) des Logistikzentrums (6) zu betreiben,
**dadurch gekennzeichnet, dass**
der Flottenmanagementserver (12) dazu eingerichtet ist, eine Programmierschnittstelle (API) bereitzustellen und der Flottenmanagementserver (12) und der externe Server (4) dazu eingerichtet sind über die Programmierschnittstelle (API) unter Verwendung eines Netzwerkprotokolls eine Datenverbindung (17) zu betreiben, und über diese Datenverbindung (17) Daten betreffend zumindest eine Logistikhandhabungsvorrichtung (9) der Mehrzahl von in dem Logistikzentrum (6) betreibbaren Logistikhandhabungsvorrichtungen (9) zu übertragen, wobei
der Flottenmanagementserver (12) mit einer Mehrzahl von Endpunkten, die Datenquellen sind, datentechnisch gekoppelt ist und dazu eingerichtet ist, Daten zumindest eines Endpunkts über einen für diesen Endpunkt spezifischen Parameter der Programmierschnittstelle (API) an den externen Server (4) zu übertragen.

2. Logistiksystem (2) nach Anspruch 1, **dadurch gekennzeichnet, dass** der externe Server (4) dazu eingerichtet ist, einen Programmierschnittstellen-Schlüssel (API key) an den Flottenmanagementserver (12) zu übertragen und der Flottenmanagementserver (12) dazu eingerichtet ist, einen Zugriff des externen Servers (4) auf die Programmierschnittstelle **API** in Abhängigkeit einer Berechtigung des Programmierschnittstellen-Schlüssels (API key) zu gestatten oder zu verweigern.

3. Logistiksystem (2) nach Anspruch 1 oder 2, **dadurch gekennzeichnet, dass** der Flottenmanagementserver (12) ferner dazu eingerichtet ist, dem externen Server (4) zu gestatten, der Programmierschnittstelle (API) zumindest einen weiteren Parameter hinzuzufügen, und wobei ferner insbesondere der Flottenmanagementserver (12) ferner dazu eingerichtet ist, dem externen Server (4) zu gestatten, Daten zumindest eines Endpunkts über den für diesen Endpunkt spezifischen Parameter der Programmierschnittstelle (API) abzufragen, wobei der Endpunkt sich insbesondere innerhalb einer Logistikhandhabungsvorrichtung (9) befindet.

4. Logistiksystem (2) nach Anspruch 3, **dadurch gekennzeichnet, dass** die Logistikhandhabungsvorrichtung (9) ein Flurförderzeug (10) ist und zumindest eines der folgenden Merkmale a) bis e) aufweist:
a) das Flurförderzeug (10) umfasst einen Positionssensor als einen Endpunkt und ist dazu eingerichtet, seine Position innerhalb des Logistikstandorts (8) zu bestimmen,
b) das Flurförderzeug (10) umfasst einen Beschleunigungssensor als einen Endpunkt, wobei das Flurförderzeug (10) insbesondere ferner dazu eingerichtet ist, während einer Zeitspanne den Beschleunigungssensor mehrfach auszulesen und ausgelesene Beschleunigungswerte an einem internen Speicherort zu speichern, wobei der Speicherort einen Endpunkt darstellt,
c) das Flurförderzeug (10) ist dazu eingerichtet, einen aktuellen Betriebsstundenwert zu bestimmen, insbesondere aus einer Fahrzeugsteuerung des Flurförderzeugs (10) abzufragen, wobei das Flurförderzeug (10) einen Speicherort für den Betriebsstundenwert umfasst und dieser Speicherort ein Endpunkt ist,
d) das Flurförderzeug (10) umfasst eine Traktionsbatterie und ist dazu eingerichtet, einen aktuellen Ladezustand der Traktionsbatterie zu bestimmen, insbesondere aus einer Fahrzeugsteuerung des Flurförderzeugs (10) abzufragen, wobei das Flurförderzeug (10) einen Speicherort für den Ladezustand umfasst und dieser Speicherort ein Endpunkt ist,
e) das Flurförderzeug (10) ist dazu eingerichtet, einen aktuellen Betriebszustand zu bestimmen, insbesondere aus einer Fahrzeugsteuerung des Flurförderzeugs (10) abzufragen, wobei das Flurförderzeug (10) einen Speicherort für den Betriebszustand umfasst und dieser Speicherort ein Endpunkt ist.

5. Logistiksystem (2) nach einem der Ansprüche 1 bis 3, **dadurch gekennzeichnet, dass** die Logistikhandhabungsvorrichtung (9) dazu eingerichtet ist, Daten zumindest eines Endpunkts in Form einer Push-Nachricht (PM) über den für diesen Endpunkt spezifischen Parameter der Programmierschnittstelle (API) an den externen Server (4) zu übertragen, wobei insbesondere die Logistikhandhabungsvorrichtung (9) zumindest einen Sensor (23), ferner insbesondere einen Beschleunigungssensor, als Endpunkt umfasst und dazu eingerichtet ist, durch Auswertung von von dem Sensor (23) erfassten Daten einen kritischen Betriebszustand zu erkennen, wobei die Logistikhandhabungsvorrichtung (9) ferner dazu eingerichtet ist, wenn ein kritischer Betriebszustand erkannt wird, eine Push-Nachricht (PM) an den externen Server (4) zu senden.

6. Logistiksystem (2) nach einem der Ansprüche 1 bis 5, **dadurch gekennzeichnet, dass** der Flottenmanagementserver (12) mit einer Mehrzahl von Zielpunkten, die Datensenken darstellen, datentechnisch gekoppelt ist und dazu eingerichtet ist, Daten für zumindest einen Zielpunkt über einen für diesen Zielpunkt spezifischen Parameter auf der Programmierschnittstelle (API) zu übertragen, wobei insbesondere der Flottenmanagementserver (12) ferner dazu eingerichtet ist, auf eine Steuerung (27) der Logistikhandhabungsvorrichtung (9), insbesondere auf eine Fahrzeugsteuerung (21) des Flurförderzeugs (10), zuzugreifen und Parameter der Steuerung, insbesondere der Fahrzeugsteuerung (21), als Zielpunkte zu definieren, wobei insbesondere der Flottenmanagementserver (12) dazu eingerichtet ist, als Zielpunkte zu definieren:
eine Mitarbeiterberechtigung zum Betrieb der Logistikhandhabungsvorrichtung (9), insbesondere des Flurförderzeugs (10),
ein Verhaltensmuster der Logistikhandhabungsvorrichtung (9), insbesondere des Flurförderzeugs (10), ferner insbesondere betreffend ein Fahrverhalten und/oder ein Verhalten eines Hydrauliksystems des Flurförderzeugs (10),
eine generelle Betriebsfähigkeit der Logistikhandhabungsvorrichtung (9), insbesondere des Flurförderzeugs (10).

7. Flottenmanagementserver (12) in einem Logistiksystem (2), umfassend:
einen externen Server (4) und zumindest ein Logistikzentrum (6), wobei das Logistikzentrum (6) umfasst:
eine Mehrzahl von an einem Logistikstandort (8) vorhandenen Logistikhandhabungsvorrichtungen (9), die an dem Logistikstandort (8) betreibbar sind, wobei als Logistikhandhabungsvorrichtung (9) sowohl ein Flurförderzeug (10) als auch eine Logistikvorrichtung (11), die mit dem Flurförderzeug (10) zusammenwirkt, bezeichnet wird,
den Flottenmanagementserver (12) und
eine Mehrzahl von Zugangspunkten (14),
wobei der Flottenmanagementserver (12) dazu eingerichtet ist, über die Zugangspunkte (14) eine drahtlose Datenverbindung mit den Logistikhandhabungsvorrichtungen (9) des Logistikzentrums (6) zu betreiben,
**dadurch gekennzeichnet, dass**
der Flottenmanagementserver (12) dazu eingerichtet ist, eine Programmierschnittstelle (API) bereitzustellen und über die Programmierschnittstelle (API) unter Verwendung eines Netzwerkprotokolls eine Datenverbindung (17) mit dem externen Server (4) zu betreiben und über diese Datenverbindung (17) Daten betreffend zumindest eine Logistikhandhabungsvorrichtung (9) der Mehrzahl von in dem Logistikzentrum (6) betreibbaren Logistikhandhabungsvorrichtungen (9) zu übertragen, wobei
der Flottenmanagementserver (12) mit einer Mehrzahl von Endpunkten, die Datenquellen sind, datentechnisch gekoppelt ist und dazu eingerichtet ist, Daten zumindest eines Endpunkts über einen für diesen Endpunkt spezifischen Parameter der Programmierschnittstelle (API) an den externen Server (4) zu übertragen.

8. Flottenmanagementserver (12) nach Anspruch 7, **dadurch gekennzeichnet, dass** der Flottenmanagementserver (12) dazu eingerichtet ist, einen Programmierschnittstellen-Schlüssel (API key) von dem externen Server (4) zu empfangen und einen Zugriff des externen Servers (4) auf die Programmierschnittstelle (API) in Abhängigkeit einer Berechtigung des Programmierschnittstellen-Schlüssels (API-key) zu gestatten oder zu verweigern.

9. Flottenmanagementserver (12) nach Anspruch 7 oder 8, **dadurch gekennzeichnet, dass** der Flottenmanagementserver (12) ferner dazu eingerichtet ist, dem externen Server (4) zu gestatten, der Programmierschnittstelle (API) zumindest einen weiteren Parameter hinzuzufügen, und wobei ferner insbesondere der Flottenmanagementserver (12) ferner dazu eingerichtet ist, dem externen Server (4) zu gestatten, Daten zumindest eines Endpunkts über den für diesen Endpunkt spezifischen Parameter der Programmierschnittstelle (API) abzufragen, wobei sich der Endpunkt innerhalb einer Logistikhandhabungsvorrichtung (9) befindet, wobei insbesondere der Flottenmanagementserver (12) dazu eingerichtet ist, Daten zumindest eines Endpunkts in Form einer Push-Nachricht (PM) von der Logistikhandhabungsvorrichtung (9) zu empfangen und diese Daten als Push-Nachricht (PM) über den für diesen Endpunkt spezifischen Parameter der Programmierschnittstelle (API) an den externen Server (4) weiterzuleiten.

10. Flottenmanagementserver (2) nach Anspruch 7, **dadurch gekennzeichnet, dass** der Flottenmanagementserver (12) mit einer Mehrzahl von Zielpunkten, die Datensenken darstellen, datentechnisch gekoppelt ist und dazu eingerichtet ist, Daten für zumindest einen Zielpunkt über einen für diesen Zielpunkt spezifischen Parameter der Programmierschnittstelle (API) von dem externen Server (4) zu empfangen und an den zumindest einen Zielpunkt weiterzuleiten.

11. Verfahren zum Betreiben eines Logistiksystems (2), wobei das Logistiksystem (2) umfasst:
einen externen Server (4) und zumindest ein Logistikzentrum (6), wobei das Logistikzentrum (6) umfasst:
eine Mehrzahl von an einem Logistikstandort (8) vorhandenen Logistikhandhabungsvorrichtungen (9), die an dem Logistikstandort (8) betrieben werden, wobei als Logistikhandhabungsvorrichtung (9) sowohl ein Flurförderzeug (10) als auch eine Logistikvorrichtung (11), die mit dem Flurförderzeug (10) zusammenwirkt, bezeichnet wird, einen Flottenmanagementserver (12) und
eine Mehrzahl von Zugangspunkten (14),
wobei der Flottenmanagementserver (12) über die Zugangspunkte (14) eine drahtlose Datenverbindung (16) mit den Logistikhandhabungsvorrichtungen (9) des Logistikzentrums (6) betreibt,
**dadurch gekennzeichnet, dass**
der Flottenmanagementserver (12) eine Programmierschnittstelle (API) bereitstellt und der Flottenmanagementserver (12) und der externe Server (4) über die Programmierschnittstelle (API) unter Verwendung eines Netzwerkprotokolls eine Datenverbindung betreiben, und über diese Datenverbindung Daten betreffend zumindest eine Logistikhandhabungsvorrichtung (9) der Mehrzahl von in dem Logistikzentrum (6) betriebenen Logistikhandhabungsvorrichtungen (9) übertragen werden, wobei der Flottenmanagementserver (12) mit einer Mehrzahl von Endpunkten, die Datenquellen sind, datentechnisch gekoppelt ist und Daten zumindest eines Endpunkts über einen für diesen Endpunkt spezifischen Parameter der Programmierschnittstelle (API) an den externen Server (4) überträgt.

12. Verfahren nach Anspruch 11, **dadurch gekennzeichnet, dass** der externe Server (4) einen Programmierschnittstellen-Schlüssel (API key) an den Flottenmanagementserver (12) überträgt und der Flottenmanagementserver (12) einen Zugriff des externen Servers (4) auf die Programmierschnittstelle in Abhängigkeit einer Berechtigung des Programmierschnittstellen-Schlüssels (API key) gestattet oder verweigert.

13. Verfahren nach Anspruch 11 oder 12, **dadurch gekennzeichnet, dass** der Flottenmanagementserver (12) ferner dem externen Server (4) gestattet, der Programmierschnittstelle (API) zumindest einen weiteren Parameter hinzuzufügen, und wobei ferner insbesondere der Flottenmanagementserver (12) ferner dem externen Server (4) gestattet, Daten zumindest eines Endpunkts über den für diesen Endpunkt spezifischen Parameter der Programmierschnittstelle (API) abzufragen, wobei sich insbesondere der Endpunkt innerhalb einer Logistikhandhabungsvorrichtung (9) befindet.

14. Verfahren nach Anspruch 13, **dadurch gekennzeichnet, dass** die Logistikhandhabungsvorrichtung (9) ein Flurförderzeug (10) ist und zumindest eines der folgenden Merkmale a) bis e) aufweist:
a) das Flurförderzeug (10) umfasst einen Positionssensor als Endpunkt und bestimmt seine Position innerhalb des Logistikstandorts (8),
b) das Flurförderzeug (10) umfasst einen Beschleunigungssensor als Endpunkt, wobei das Flurförderzeug (10) insbesondere ferner während einer Zeitspanne den Beschleunigungssensor mehrfach ausliest und ausgelesene Beschleunigungswerte an einem internen Speicherort speichert, wobei der Speicherort einen Endpunkt darstellt,
c) das Flurförderzeug (10) bestimmt einen aktuellen Betriebsstundenwert, wobei insbesondere der Betriebsstundenwert aus einer Fahrzeugsteuerung des Flurförderzeugs (10) abgefragt wird, und wobei das Flurförderzeug (10) den Betriebsstundenwert an einem Speicherort abspeichert und dieser Speicherort ein Endpunkt ist,
d) das Flurförderzeug (10) umfasst eine Traktionsbatterie und bestimmt einen aktuellen Ladezustand der Traktionsbatterie oder fragt insbesondere den aktuellen Ladezustand aus einer Fahrzeugsteuerung des Flurförderzeugs (10) ab, wobei das Flurförderzeug (10) einen Speicherort für den Ladezustand umfasst, Informationen zum aktuellen Ladezustand an diesem Speicherort abspeichert und dieser Speicherort ein Endpunkt ist,
e) das Flurförderzeug (10) einen aktuellen Betriebszustand bestimmt, insbesondere aus einer Fahrzeugsteuerung des Flurförderzeugs (10) abfragt, wobei das Flurförderzeug (10) einen Speicherort für den Betriebszustand umfasst, Informationen zum Betriebszustand an diesem Speicherort abspeichert und dieser Speicherort ein Endpunkt ist.

15. Verfahren nach einem der Ansprüche 11 bis 14, **dadurch gekennzeichnet, dass** die Logistikhandhabungsvorrichtung (9) Daten zumindest eines Endpunkts in Form einer Push-Nachricht über den für diesen Endpunkt spezifischen Parameter der Programmierschnittstelle (API) an den externen Server (4) überträgt, wobei insbesondere die Logistikhandhabungsvorrichtung (9) zumindest einen Sensor, ferner insbesondere einen Beschleunigungssensor, als Endpunkt umfasst und durch Auswertung von von dem Sensor erfassten Daten einen kritischen Betriebszustand erkennt, wobei die Logistikhandhabungsvorrichtung (9) ferner, wenn sie einen kritischen Betriebszustand erkannt hat, eine Push-Nachricht an den externen Server (4) sendet.

16. Verfahren nach einem der Ansprüche 12 bis 15, **dadurch gekennzeichnet, dass** der Flottenmanagementserver (12) mit einer Mehrzahl von Zielpunkten, die Datensenken darstellen, datentechnisch gekoppelt ist und Daten für zumindest einen Zielpunkt über einen für diesen Zielpunkt spezifischen Parameter auf der Programmierschnittstelle (API) überträgt, wobei insbesondere der Flottenmanagementserver (12) ferner auf eine Steuerung der Logistikhandhabungsvorrichtung (9), ferner insbesondere auf eine Fahrzeugsteuerung des Flurförderzeugs (10), zugreift und Parameter der Steuerung, insbesondere der Fahrzeugsteuerung, als Zielpunkte definiert, wobei insbesondere als Zielpunkte definiert werden:
eine Mitarbeiterberechtigung zum Betrieb der Logistikhandhabungsvorrichtung (9), insbesondere des Flurförderzeugs (10),
ein Verhaltensmuster der Logistikhandhabungsvorrichtung (9), insbesondere des Flurförderzeugs (10), ferner insbesondere betreffend ein Fahrverhalten und/oder ein Verhalten eines Hydrauliksystems des Flurförderzeugs (10),
eine generelle Betriebsfähigkeit der Logistikhandhabungsvorrichtung (9), insbesondere des Flurförderzeugs (10).

## Claims

1. A logistics system (2), comprising:
an external server (4) and at least one logistics center (6), wherein the logistics center (6) comprises:
a plurality of logistics handling devices (9) present at a logistics site (8), which can be operated at the logistics site (8), wherein both an industrial truck (10) and a logistics device (11), which interacts with the industrial truck (10), are referred to as a logistics handling device (9),
a fleet management server (12), and
a plurality of access points (14),
wherein the fleet management server (12) is designed to operate, via the access points (14), a wireless data connection (16) with the logistics handling devices (9) of the logistics center (6),
**characterized in that**
the fleet management server (12) is designed to provide a programming interface (API), and the fleet management server (12) and the external server (4) are designed to operate a data connection (17) via the programming interface (API) using a network protocol, and, via this data connection (17), to transmit data relating to at least one logistics handling device (9) of the plurality of logistics handling devices (9) which can be operated in the logistics center (6), wherein the fleet management server (12) is coupled by data technology to a plurality of end points which are data sources, and is designed to transmit data of at least one end point to the external server (4) via a parameter of the programming interface (API), which is specific to this end point.

2. The logistics system (2) according to Claim 1, **characterized in that** the external server (4) is designed to transmit a programming interface key (API key) to the fleet management server (12), and the fleet management server (12) is designed to allow or deny access of the external server (4) to the programming interface API, depending upon an authorization of the programming interface key (API key).

3. The logistics system (2) according to Claim 1 or 2, **characterized in that** the fleet management server (12) is further designed to allow the external server (4) to add at least one further parameter to the programming interface (API), and wherein, more particularly, the fleet management server (12) is further designed to allow the external server (4) to request data of at least one end point via the parameter of the programming interface (API), which is specific to this end point, wherein the end point is in particular located within a logistics handling device (9).

4. The logistics system (2) according to Claim 3, **characterized in that** the logistics handling device (9) is an industrial truck (10) and has at least one of the following features a) to e):
a) the industrial truck (10) comprises a position sensor as an end point and is designed to determine its position within the logistics site (8),
b) the industrial truck (10) comprises an acceleration sensor as an end point, wherein the industrial truck (10) is in particular further designed to read the acceleration sensor several times during a period of time and to store read acceleration values in an internal storage location, wherein the storage location represents an end point,
c) the industrial truck (10) is designed to determine a current operating hours value, in particular to request a current operating hours value from a vehicle control system of the industrial truck (10), wherein the industrial truck (10) comprises a storage location for the operating hours value, and this storage location is an end point,
d) the industrial truck (10) comprises a traction battery and is designed to determine a current state of charge of the traction battery, in particular to request a current state of charge from a vehicle control system of the industrial truck (10), wherein the industrial truck (10) comprises a storage location for the state of charge, and this storage location is an end point,
e) the industrial truck (10) is designed to determine a current operating state, in particular to request a current operating state from a vehicle control system of the industrial truck (10), wherein the industrial truck (10) comprises a storage location for the operating state, and this storage location is an end point.

5. The logistics system (2) according to any one of Claims 1 to 3, **characterized in that** the logistics handling device (9) is designed to transmit data of at least one end point in the form of a push message (PM) to the external server (4) via the parameter of the programming interface (API), which is specific to this end point, wherein in particular the logistics handling device (9) comprises at least one sensor (23), more particularly an acceleration sensor, as an end point and is designed, by evaluating data captured by the sensor (23), to detect a critical operating state, wherein the logistics handling device (9) is further designed to send a push message (PM) to the external server (4) if a critical operating state is detected.

6. The logistics system (2) according to any one of Claims 1 to 5, **characterized in that** the fleet management server (12) is coupled by data technology to a plurality of target points which represent data sinks, and is designed to transmit data for at least one target point via a parameter on the programming interface (API), which is specific to this target point, wherein in particular the fleet management server (12) is further designed to access a control system (27) of the logistics handling device (9), in particular a vehicle control system (21) of the industrial truck (10), and to define parameters of the control system, in particular of the vehicle control system (21), as target points, wherein in particular the fleet management server (12) is designed to define the following as target points:
an employee authorization to operate the logistics handling device (9), in particular the industrial truck (10),
a pattern of behavior of the logistics handling device (9), in particular of the industrial truck (10), further, more particularly relating to a driving behavior and/or a behavior of a hydraulic system of the industrial truck (10),
a general operating capacity of the logistics handling device (9), in particular of the industrial truck (10).

7. A fleet management server (12) in a logistics system (2), comprising:
an external server (4) and at least one logistics center (6), wherein the logistics center (6) comprises:
a plurality of logistics handling devices (9) present at a logistics site (8), which can be operated at the logistics site (8), wherein both an industrial truck (10) and a logistics device (11), which interacts with the industrial truck (10), are referred to as a logistics handling device (9),
the fleet management server (12), and
a plurality of access points (14),
wherein the fleet management server (12) is designed to operate, via the access points (14), a wireless data connection (16) with the logistics handling devices (9) of the logistics center (6),
**characterized in that**
the fleet management server (12) is designed to provide a programming interface (API) and to operate a data connection (17) with the external server (4) via the programming interface (API) using a network protocol, and, via this data connection (17), to transmit data relating to at least one logistics handling device (9) of the plurality of logistics handling devices (9) which can be operated in the logistics center (6), wherein the fleet management server (12) is coupled by data technology to a plurality of end points which are data sources, and is designed to transmit data of at least one end point to the external server (4) via a parameter of the programming interface (API), which is specific to this end point.

8. The fleet management server (12) according to Claim 7, **characterized in that** the fleet management server (12) is designed to receive a programming interface key (API key) from the external server (4) and to allow or deny access of the external server (4) to the programming interface (API), depending upon an authorization of the programming interface key (API key).

9. The fleet management server (12) according to Claim 7 or 8, **characterized in that** the fleet management server (12) is further designed to allow the external server (4) to add at least one further parameter to the programming interface (API), and wherein, more particularly, the fleet management server (12) is further designed to allow the external server (4) to request data of at least one end point via the parameter of the programming interface (API), which is specific to this end point, wherein the end point is located within a logistics handling device (9), wherein in particular the fleet management server (12) is designed to receive data of at least one end point in the form of a push message (PM) from the logistics handling device (9) and to forward said data as a push message (PM) to the external server (4) via the parameter of the programming interface (API), which is specific to this end point.

10. The fleet management server (2) according to Claim 7, **characterized in that** the fleet management server (12) is coupled by data technology to a plurality of target points which represent data sinks, and is designed to receive data for at least one target point from the external server (4) via a parameter of the programming interface (API), which is specific to this target point, and to forward said data to the at least one target point.

11. A method for operating a logistics system (2), wherein the logistics system (2) comprises:
an external server (4) and at least one logistics center (6), wherein the logistics center (6) comprises:
a plurality of logistics handling devices (9) present at a logistics site (8),
which are operated at the logistics site (8), wherein both an industrial truck (10) and a logistics device (11), which interacts with the industrial truck (10), are referred to as a logistics handling device (9),
a fleet management server (12), and
a plurality of access points (14),
wherein the fleet management server (12) operates, via the access points (14), a wireless data connection (16) with the logistics handling devices (9) of the logistics center (6),
**characterized in that**
the fleet management server (12) provides a programming interface (API), and the fleet management server (12) and the external server (4) operate a data connection via the programming interface (API) using a network protocol, and, via this data connection, data are transmitted relating to at least one logistics handling device (9) of the plurality of logistics handling devices (9) operated in the logistics center (6), wherein the fleet management server (12) is coupled by data technology to a plurality of end points which are data sources, and transmits data of at least one end point to the external server (4) via a parameter of the programming interface (API), which is specific to this end point.

12. The method according to Claim 11, **characterized in that** the external server (4) transmits a programming interface key (API key) to the fleet management server (12), and the fleet management server (12) allows or denies access of the external server (4) to the programming interface, depending upon an authorization of the programming interface key (API key).

13. The method according to Claim 11 or 12, **characterized in that** the fleet management server (12) further allows the external server (4) to add at least one further parameter to the programming interface (API), and wherein, more particularly, the fleet management server (12) further allows the external server (4) to request data of at least one end point via the parameter of the programming interface (API), which is specific to this end point, wherein in particular the end point is located within a logistics handling device (9).

14. The method according to Claim 13, **characterized in that** the logistics handling device (9) is an industrial truck (10) and has at least one of the following features a) to e):
a) the industrial truck (10) comprises a position sensor as an end point and determines its position within the logistics site (8),
b) the industrial truck (10) comprises an acceleration sensor as an end point, wherein the industrial truck (10) in particular further reads the acceleration sensor several times during a period of time and stores read acceleration values in an internal storage location, wherein the storage location represents an end point,
c) the industrial truck (10) determines a current operating hours value, wherein in particular the operating hours value is requested from a vehicle control system of the industrial truck (10), and wherein the industrial truck (10) stores the operating hours value in a storage location, and this storage location is an end point,
d) the industrial truck (10) comprises a traction battery and determines a current state of charge of the traction battery or in particular requests the current state of charge from a vehicle control system of the industrial truck (10), wherein the industrial truck (10) comprises a storage location for the state of charge, stores information regarding the current state of charge in this storage location, and this storage location is an end point,
e) the industrial truck (10) determines a current operating state, in particular requests a current operating state from a vehicle control system of the industrial truck (10), wherein the industrial truck (10) comprises a storage location for the operating state, stores information regarding the operating state in this storage location, and this storage location is an end point.

15. The method according to any one of Claims 11 to 14, **characterized in that** the logistics handling device (9) transmits data of at least one end point in the form of a push message to the external server (4) via the parameter of the programming interface (API), which is specific to this end point, wherein in particular the logistics handling device (9) comprises at least one sensor, more particularly an acceleration sensor, as an end point and, by evaluating data captured by the sensor, detects a critical operating state, wherein the logistics handling device (9) further sends a push message to the external server (4) if it has detected a critical operating state.

16. The method according to any one of Claims 12 to 15, **characterized in that** the fleet management server (12) is coupled by data technology to a plurality of target points which represent data sinks, and transmits data for at least one target point via a parameter on the programming interface (API), which is specific to this target point, wherein in particular the fleet management server (12) further accesses a control system of the logistics handling device (9), more particularly a vehicle control system of the industrial truck (10), and defines parameters of the control system, in particular of the vehicle control system, as target points, wherein in particular the following are defined as target points:
an employee authorization to operate the logistics handling device (9), in particular the industrial truck (10),
a pattern of behavior of the logistics handling device (9), in particular of the industrial truck (10), more particularly relating to a driving behavior and/or a behavior of a hydraulic system of the industrial truck (10),
a general operating capacity of the logistics handling device (9), in particular of the industrial truck (10).

## Revendications

1. Système logistique (2) comprenant :
un serveur externe (4) et au moins un centre logistique (6), le centre logistique (6) comprenant :
une pluralité de dispositifs (9) de manutention logistique, présents sur un site logistique (8) et opérationnels sur ce site logistique (8), le terme « dispositif (9) de manutention logistique » désignant aussi bien un chariot de manutention (10) qu'un dispositif logistique (11) interagissant avec le chariot de manutention (10),
un serveur (12) de gestion de flotte, et
une pluralité de points d'accès (14),
le serveur (12) de gestion de flotte étant conçu pour établir, via les points d'accès (14), une connexion de données sans fil (16) avec les dispositifs (9) de manutention logistique du centre logistique (6),
**caractérisé en ce que**
le serveur (12) de gestion de flotte est conçu pour fournir une interface de programmation (API), et le serveur (12) de gestion de flotte ainsi que le serveur externe (4) sont configurés pour établir une connexion de données (17) via l'interface de programmation (API) en utilisant un protocole réseau, et pour transmettre, via cette connexion de données (17), des données concernant au moins un dispositif (9) de manutention logistique parmi la pluralité de dispositifs (9) de manutention logistique opérant dans le centre logistique (6),
le serveur (12) de gestion de flotte est relié informatiquement à une pluralité de points terminaux, qui constituent des sources de données, et est configuré pour transmettre au serveur externe (4) les données d'au moins un point terminal via un paramètre de l'interface de programmation (API) spécifique à ce point terminal.

2. Système logistique (2) selon la revendication 1, **caractérisé en ce que** le serveur externe (4) est configuré pour transmettre une clé d'interface de programmation (API key) au serveur (12) de gestion de flotte, et **en ce que** le serveur (12) de gestion de flotte est configuré pour autoriser ou refuser l'accès du serveur externe (4) à l'interface de programmation (API) en fonction d'une autorisation liée à la clé d'interface de programmation (API key).

3. Système logistique (2) selon la revendication 1 ou la revendication 2, **caractérisé en ce que** le serveur (12) de gestion de flotte est en outre configuré pour permettre au serveur externe (4) d'ajouter au moins un paramètre supplémentaire à l'interface de programmation (API) , et **en ce que**, en outre, le serveur (12) de gestion de flotte est notamment configuré pour autoriser le serveur externe (4) à interroger les données d'au moins un point terminal via le paramètre de l'interface de programmation (API) spécifique à ce point terminal, le point terminal se trouvant notamment à l'intérieur d'un dispositif (9) de manutention logistique.

4. Système logistique (2) selon la revendication 3, **caractérisé en ce que** le dispositif (9) de manutention logistique est un chariot de manutention (10) et présente au moins l'une des caractéristiques suivantes a) à e) :
a) le chariot de manutention (10) comprend un capteur de position en tant que point terminal et est configuré pour déterminer sa position au sein du site logistique (8),
b) le chariot de manutention (10) comprend un capteur d'accélération servant de point terminal, le chariot de manutention (10) étant en outre notamment configuré pour lire le capteur d'accélération à plusieurs reprises pendant un intervalle de temps et pour enregistrer les valeurs d'accélération lues dans un emplacement de mémoire interne, cet emplacement de mémoire constituant un point terminal,
c) le chariot de manutention (10) est configuré pour déterminer une valeur actuelle d'heures de service, en particulier en interrogeant une unité de commande du chariot de manutention (10) sur cette valeur, le chariot de manutention (10) comprenant un emplacement de stockage pour la valeur des heures de service et cet emplacement de stockage constituant un point terminal,
d) le chariot de manutention (10) comprend une batterie de traction et est configuré pour déterminer un état de charge actuel de la batterie de traction, en particulier en interrogeant un système de commande du chariot de manutention (10) sur cette valeur, le chariot de manutention (10) comprenant un emplacement de stockage pour l'état de charge et cet emplacement de stockage constituant un point terminal,
e) le chariot de manutention (10) est configuré pour déterminer un état de fonctionnement actuel, en particulier en interrogeant un système de commande du chariot de manutention (10) sur cet état, le chariot de manutention (10) comprenant un emplacement de stockage pour l'état de fonctionnement, et cet emplacement de stockage étant un point terminal.

5. Système logistique (2) selon l'une des revendications 1 à 3, **caractérisé en ce que** le dispositif (9) de manutention logistique est configuré pour transmettre au serveur externe (4) des données d'au moins un point terminal sous la forme d'un message « push » (PM) via les paramètres de l'interface de programmation (API) spécifiques à ce point terminal, le dispositif (9) de manutention logistique comprenant notamment au moins un capteur (23), en particulier un capteur d'accélération, en tant que point terminal et étant configuré pour détecter un état de fonctionnement critique par l'analyse des données enregistrées par le capteur (23), le dispositif (9) de manutention logistique étant en outre configuré pour, lorsqu'un état de fonctionnement critique est détecté, envoyer un message « push » (PM) au serveur externe (4).

6. Système logistique (2) selon l'une des revendications 1 à 5, **caractérisé en ce que** le serveur (12) de gestion de flotte est relié informatiquement à une pluralité de points de destination constituant des collecteurs de données et est conçu pour transmettre des données pour au moins un point de destination, via un paramètre spécifique, à ce point de destination sur l'interface de programmation (API) , le serveur (12) de gestion de flotte étant notamment également conçu pour accéder à un système de commande (27) du dispositif (9) de manutention logistique, en particulier à un dispositif (21) de commande de véhicule du chariot de manutention (10), et à définir des paramètres de la commande, en particulier du dispositif de commande (21), comme points de destination, le serveur (12) de gestion de flotte étant notamment conçu pour définir comme points de destination :
une autorisation accordée à un collaborateur pour l'utilisation du dispositif (9) de manutention logistique, en particulier du chariot de manutention (10), un modèle de comportement du dispositif (9) de manutention logistique, en particulier du chariot de manutention (10), concernant notamment un comportement de conduite et/ou un comportement d'un système hydraulique du chariot de manutention (10),
une capacité opérationnelle générale du dispositif (9) de manutention logistique, en particulier du chariot de manutention (10).

7. Serveur (12) de gestion de flotte dans un système logistique (2), comprenant :
un serveur externe (4) et au moins un centre logistique (6), le centre logistique (6) comprenant :
une pluralité de dispositifs (9) de manutention logistique, présents sur un site logistique (8) et opérationnels sur ce site logistique (8), le terme « dispositif (9) de manutention logistique » désignant aussi bien un chariot de manutention (10) qu'un dispositif logistique (11) interagissant avec le chariot de manutention (10),
le serveur (12) de gestion de flotte, et
une pluralité de points d'accès (14),
le serveur (12) de gestion de flotte étant conçu pour établir, via les points d'accès (14), une connexion de données sans fil avec les dispositifs (9) de manutention logistique du centre logistique (6),
**caractérisé en ce que**
le serveur (12) de gestion de flotte est conçu pour fournir une interface de programmation (API) et, via cette interface de programmation (API) , d'établir une connexion de données (17) avec le serveur externe (4) en utilisant un protocole réseau, et pour transmettre, via cette connexion de données (17), des données concernant au moins un dispositif (9) de manutention logistique parmi la pluralité de dispositifs (9) de manutention logistique opérant dans le centre logistique (6),
le serveur (12) de gestion de flotte étant relié informatiquement à une pluralité de points terminaux, qui constituent également des sources de données, et étant configuré pour transmettre au serveur externe (4) les données d'au moins un point terminal via un paramètre de l'interface de programmation (API) spécifique à ce point terminal.

8. Serveur (12) de gestion de flotte selon la revendication 7, **caractérisé en ce que** le serveur (12) de gestion de flotte est conçu pour recevoir une clé d'interface de programmation (API key) du serveur externe (4) et pour autoriser ou refuser l'accès du serveur externe (4) à l'interface de programmation (API) en fonction d'une autorisation liée à la clé d'interface de programmation (API key).

9. Serveur (12) de gestion de flotte selon la revendication 7 ou la revendication 8, **caractérisé en ce que** le serveur (12) de gestion de flotte est en outre configuré pour permettre au serveur externe (4) d'ajouter au moins un paramètre supplémentaire à l'interface de programmation (API) , et **en ce que**, en outre, le serveur (12) de gestion de flotte est notamment configuré pour permettre au serveur externe (4) d'interroger les données d'au moins un terminal via le paramètre de l'interface de programmation (API) spécifique à ce point terminal, le point terminal se trouvant à l'intérieur d'un dispositif (9) de manutention logistique, le serveur (12) de gestion de flotte étant notamment configuré pour recevoir les données d'au moins un point terminal sous la forme d'un message « push » (PM) depuis le dispositif (9) de manutention logistique et de transmettre ces données sous forme de message « push » (PM) au serveur externe (4) via le paramètre de l'interface de programmation (API) spécifique à ce point terminal.

10. Serveur de gestion de flotte (2) selon la revendication 7, **caractérisé en ce que** le serveur (12) de gestion de flotte est relié informatiquement à une pluralité de points de destination constituant des collecteurs de données, et est conçu pour recevoir, en provenance du serveur externe (4), des données destinées à au moins un point de destination via un paramètre de l'interface de programmation (API) spécifique à ce point de destination, et pour les transmettre à ce au moins un point de destination.

11. Procédé d'exploitation d'un système logistique (2), le système logistique (2) comprenant :
un serveur externe (4) et au moins un centre logistique (6), le centre logistique (6) comprenant :
une pluralité de dispositifs (9) de manutention logistique, présents sur un site logistique (8) et opérationnels sur ce site logistique (8), le terme « dispositif (9) de manutention logistique » désignant aussi bien un chariot de manutention (10) qu'un dispositif logistique (11) interagissant avec le chariot de manutention (10),
un serveur (12) de gestion de flotte, et
une pluralité de points d'accès (14),
le serveur (12) de gestion de flotte établissant, via les points d'accès (14), une connexion de données sans fil (16) avec les dispositifs (9) de manutention logistique du centre logistique (6),
**caractérisé en ce que**
le serveur (12) de gestion de flotte fournit une interface de programmation (API), et le serveur (12) de gestion de flotte et le serveur externe (4) établissent une connexion de données via l'interface de programmation (API) en utilisant un protocole réseau, et **en ce que**, via cette connexion de données, des données concernant au moins un dispositif (9) de manutention logistique parmi la pluralité de dispositifs (9) de manutention logistique opérant dans le centre logistique (6), le serveur (12) de gestion de flotte étant relié informatiquement à une pluralité de points terminaux qui constituent des sources de données, et transmettant au serveur externe (4) les données d'au moins un point terminal via un paramètre de l'interface de programmation (API) spécifique à ce point terminal.

12. Procédé selon la revendication 11, **caractérisé en ce que** le serveur externe (4) transmet une clé d'interface de programmation (API key) au serveur (12) de gestion de flotte, et **en ce que** le serveur (12) de gestion de flotte autorise ou refuse l'accès du serveur externe (4) à l'interface de programmation d'application en fonction d'une autorisation liée à la clé d'interface de programmation (API key).

13. Procédé selon la revendication 11 ou la revendication 12, **caractérisé en ce que** le serveur (12) de gestion de flotte autorise en outre le serveur externe (4) à ajouter au moins un paramètre supplémentaire à l'interface de programmation (API) , et **en ce que**, en outre, le serveur (12) de gestion de flotte autorise notamment le serveur externe (4) à interroger les données d'au moins un point terminal via le paramètre de l'interface de programmation (API) spécifique à ce point terminal, le point terminal se trouvant notamment à l'intérieur d'un dispositif (9) de manutention logistique.

14. Procédé selon la revendication 13, **caractérisé en ce que** le dispositif (9) de manutention logistique est un chariot de manutention (10) et présente au moins l'une des caractéristiques suivantes a) à e) :
a) le chariot de manutention (10) comprend un capteur de position en tant que point terminal et détermine sa position au sein du site logistique (8),
b) le chariot de manutention (10) comprend un capteur d'accélération servant de point terminal, le chariot de manutention (10) effectuant en outre, notamment, plusieurs lectures du capteur d'accélération pendant un intervalle de temps et enregistrant les valeurs d'accélération lues dans un emplacement de mémoire interne, cet emplacement de mémoire constituant un point terminal,
c) le chariot de manutention (10) détermine une valeur actuelle d'heures de service, une interrogation de cette valeur se faisant notamment par une unité de commande du chariot de manutention (10), et le chariot de manutention (10) enregistre la valeur des heures de service dans un emplacement de stockage, cet emplacement de stockage constituant un point terminal,
d) le chariot de manutention (10) comprend une batterie de traction et détermine un état de charge actuel de la batterie de traction ou, en particulier, interroge le système de commande du chariot de manutention (10) pour obtenir l'état de charge actuel, le chariot de manutention (10) comprenant un emplacement de stockage pour l'état de charge, enregistre des informations relatives à l'état de charge actuel à cet emplacement de stockage, et cet emplacement de stockage est un point terminal,
e) le chariot de manutention (10) détermine un état de fonctionnement actuel, notamment par une interrogation sur cet état auprès d'un système de commande du chariot de manutention (10), le chariot de manutention (10) comprenant un emplacement de stockage pour l'état de fonctionnement, stockant des informations relatives à l'état de fonctionnement à cet emplacement de stockage, et cet emplacement de stockage étant un point terminal.

15. Procédé selon l'une des revendications 11 à 14, **caractérisé en ce que** le dispositif (9) de manutention logistique transmet au serveur externe (4) les données d'au moins un point terminal sous la forme d'un message « push » via les paramètres spécifiques à ce point terminal de l'interface de programmation (APl), le dispositif (9) de manutention logistique comprenant notamment au moins un capteur, en particulier un capteur d'accélération, en tant que point terminal et détectant un état de fonctionnement critique en analysant les données enregistrées par le capteur, le dispositif (9) de manutention logistique, lorsqu'il a détecté un état de fonctionnement critique, envoyant en outre un message « push » au serveur externe (4).

16. Procédé selon l'une des revendications 12 à 15, **caractérisé en ce que** le serveur (12) de gestion de flotte est relié informatiquement à une pluralité de points de destination constituant des collecteurs de données et transmet des données pour au moins un point de destination, via un paramètre spécifique, à ce point de destination sur l'interface de programmation (API), le serveur (12) de gestion de flotte accède en outre à un système de commande du dispositif (9) de manutention logistique, en particulier à un système de commande du chariot de manutention (10), et définit des paramètres de la commande, en particulier de la commande du chariot de manutention, comme points de destination, les points de destination définis comprenant notamment :
une autorisation accordée à un collaborateur pour l'utilisation du dispositif (9) de manutention logistique, en particulier du chariot de manutention (10), un modèle de comportement du dispositif (9) de manutention logistique, en particulier du chariot de manutention (10), ainsi qu'en particulier un comportement de conduite et/ou un comportement d'un système hydraulique du chariot de manutention (10),
une capacité opérationnelle générale du dispositif (9) de manutention logistique, en particulier du chariot de manutention (10).
